(19) Europäisches Patentamt
European Patent Office
Office européen des brevets

(11) **EP 1 725 958 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **05730883.5**

(22) Anmeldetag: **14.04.2005**

(51) Int Cl.:
***G06F 17/30*** *(2006.01)*

(86) Internationale Anmeldenummer:
**PCT/EP2005/003959**

(87) Internationale Veröffentlichungsnummer:
**WO 2005/109245 (17.11.2005 Gazette 2005/46)**

(54) **VERFAHREN UND VORRICHTUNG ZUR INFORMATIONSWIEDERGABE**

METHOD AND DEVICE FOR THE REPRODUCTION OF INFORMATION

PROCEDE ET DISPOSITIF DE RESTITUTION D'INFORMATIONS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **28.04.2004 DE 102004020878**

(43) Veröffentlichungstag der Anmeldung:
**29.11.2006 Patentblatt 2006/48**

(73) Patentinhaber: **Fraunhofer-Gesellschaft zur Förderung der angewandten Forschung e.V. 80686 München (DE)**

(72) Erfinder:
- **SERRA, Mercé**
  **91056 Erlangen (DE)**
- **KORTE, Olaf**
  **91338 Igensdorf (DE)**
- **ZINK, Alexander**
  **96135 Stegaurach (DE)**

(74) Vertreter: **Schoppe, Fritz Schoppe, Zimmermann, Stöckeler & Zinkler Patentanwälte Postfach 246 82043 Pullach bei München (DE)**

(56) Entgegenhaltungen:
**WO-A-20/04025510**

- **MOTOMURA Y ET AL: "Generative user models for adaptive information retrieval" SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, Bd. 1, 8. Oktober 2000 (2000-10-08), Seiten 665-670, XP010523484 ISBN: 0-7803-6583-6**
- **JIANGSHAN XU ET AL: "The development and prospect of personalized TV program recommendation systems" MULTIMEDIA SOFTWARE ENGINEERING, 2002. PROCEEDINGS. FOURTH INTERNATIONAL SYMPOSIUM ON DEC. 11-13, 2002, PISCATAWAY, NJ, USA,IEEE, 11. Dezember 2002 (2002-12-11), Seiten 82-89, XP010632737 ISBN: 0-7695-1857-5**

**Beschreibung**

Die vorliegende Erfindung bezieht sich auf die Informationswiedergabe, wie z.B. die Wiedergabe von Audio- und/oder Videodaten, und insbesondere eine intelligente und verbesserte Art und Weise zur Wiedergabe von Informationen aus einer Mehrzahl von Informationen, wie z.B. einer Mehrzahl von Nachrichten, Musikstücken oder Videoclips, wobei sich die vorliegende Erfindung aber auch auf die Wiedergabe von Informationen solcher Art bezieht, wie sie bei Home Replenishment Systemen, also automatischen Bestellsystemen für den Haushalt, auftreten, nämlich Nachbestellungen von Lebensmitteln.

Vor allem im Internetbereich existieren unterschiedliche Verfahren, um einem Internetbenutzer aus der Fülle von Informationen, die im Internet verfügbar sind, solche, entweder auf Anforderung hin oder unaufgefordert, zu präsentieren, die ihn aufgrund seiner Persönlichkeit am wahrscheinlichsten interessieren, also Verfahren, die einen personalisierten Inhalt anbieten. Viele dieser Verfahren liefern entweder Inhalt auf Anforderung hin, d.h. gemäß genauer Spezifikationen, oder Inhalt nach einem eingestellten detaillierten Profil.

Andere Verfahren wiederum teilen ihre Ressourcen unter verschiedenen Anwendern auf und stellen eine Korrelation der Auswahl jedes Anwenders fest. Somit können zusätzlich zum explizit angeforderten Inhalt Objektempfehlungen von anderen Anwendern angeboten werden, die ähnlichen Inhalt angefordert haben.

Die Nachteile der existierenden Verfahren bestehen zum einen in der Notwendigkeit exakter Anfragen oder sehr detaillierter Einstellungen und zum anderen in der fehlenden Anpassungsfähigkeit an verschiedene Umgebungen bzw.

Situationen. Darüber hinaus muss sich der Benutzer gut mit dem jeweiligen System auskennen, um komplexe Einstellungen eingeben zu können. Ein Beispiel für ein bekanntes Verfahren findet sich in WO 2004/025510 A.

Es besteht deshalb ein Bedarf nach einem verbesserten Schema zur Informationswiedergabe bzw. -auswahl, das in der Lage ist, Personen aus einer Vielzahl von Informationen angepasst an die jeweilige Persönlichkeit diejenigen Informationen wiederzugeben, welche dem Persönlichkeitsprofil am besten angepasst sind, ohne dabei von dem Benutzer bzw. der Person aufwändige Einstellungen abzuverlangen. Ideal wäre ein Informationswiedergabe- bzw. -auswahlschema, das, ohne dass es der Benutzer merkt, aus der Fülle von zur Verfügung stehenden Informationen immer diejenigen auswählt, die den Wünschen und Bedürfnissen oder allgemein den Individualitäten des Benutzers am nächsten kommen.

Die Aufgabe der vorliegenden Erfindung besteht folglich darin, ein Informationswiedergabeschema zu schaffen, das nur wenig oder gar keinen zusätzlichen Aufwand durch den Benutzer erfordert, um die Informationswiedergabe an den Benutzer anzupassen.

Diese Aufgabe wird durch eine Vorrichtung gemäß Anspruch 1 und ein Verfahren gemäß Anspruch 24 gelöst.

Der vorliegenden Erfindung liegt die Erkenntnis zugrunde, dass ein intelligentes und sich an die Wünsche und Bedürfnisse des Benutzers in für den Benutzer fast unmerklicher und für denselben mit wenig oder gar keinem Zusatzaufwand verbundener Art und Weise anpassendes Informationswiedergabeschema geschaffen werden kann, wenn aus Informationen oder einer Mehrzahl von Informationen die Auswahl der wiederzugebenden Informationen zufällig basierend auf einer adaptiven Wahrscheinlichkeitsverteilung oder und zufällig und anschließend basierend auf einer adaptiven Wahrscheinlichkeitsverteilung durchgeführt wird, und basierend auf einem erfassten Verhalten des Benutzers die Wiedergabe der ausgewählten Informationen die adaptive Wahrscheinlichkeitsverteilung adaptiert wird. Das Verhalten des Benutzers wird folglich als Regelgröße zur Adaption der adaptiven Wahrscheinlichkeitsverteilung verwendet, welche letztere unter den wiedergebbaren Informationen bzw. den Informationsobjekten, in denen die wiedergebbaren Informationen bereitgestellt sind, definiert, wie wahrscheinlich es ist, dass eine bestimmte in einem Informationsobjekt bereitgestellte Information nach der nächsten zufälligen Auswahl für die nächste wiederzugebende Information akzeptiert wird oder nicht.

Der Zusatzaufwand, der für den Benutzer damit verbunden ist, in Form eines wertenden Verhaltens die Regelgröße für die Adaption der Wahrscheinlichkeitsverteilung zu liefern, kann hierbei gering gehalten werden oder entfällt völlig. Gemäß einem speziellen Ausführungsbeispiel ist nämlich eine Betätigungseinrichtung für den Benutzer vorgesehen, um zum Ausdruck bringen zu können, dass die Wiedergabe der aktuellen Information abgebrochen und eine neue Information wiedergegeben werden soll, d.h. eine Art SKIP- bzw. Überspring-Taste. Eine Betätigung dieser Einrichtung, die gemäß dem speziellen Ausführungsbeispiel als einfacher Knopf ausgeführt ist, wird als ablehnendes Verhalten des Benutzers gewertet, während das Nicht-Betätigen dieser Einrichtung während der Wiedergabe einer bestimmten Information als zustimmendes bzw. begrüßendes Verhalten des Benutzers gewertet wird. Ein Zusatzaufwand für den Benutzer wird hierdurch vermieden, da der Benutzer ja ohnehin eine Betätigungseinrichtung bedient hätte, um ein nächstes Informationsobjekt selbst auszuwählen. Im Gegenteil wird idealerweise die Adaption der Wahrscheinlichkeitsverteilung abhängig von dem erfassten ablehnenden und zustimmenden Verhalten dazu führen, dass der Benutzer irgendwann kaum noch durch Betätigung der Betätigungseinrichtung ablehnend reagieren muss.

In dem Fall eines ablehnenden Verhaltens des Benutzers wird die Wahrscheinlichkeitsverteilung derart abgeändert, dass die Wiedergabe der Information des Informationsobjekts, das soeben wiedergegeben worden ist, beim nächsten Mal weniger wahrscheinlich ist und gleichzeitig auch die Wiedergabe von Informationen von Informationsobjekten weniger wahrscheinlich ist, die mehr oder weniger in eine gleiche Kategorie fallen, wie das soeben wiedergegebene Informationsobjekt. Hierzu umfasst jedes Informationsobjekt beispielsweise Kategoriezuordnungsdaten, die das Informationsobjekt einer oder mehreren Kategorien aus einem vorbestimmten Satz von Kategorien zuordnen. Die Wahrscheinlichkeitsverteilung wird dann beispielsweise durch eine Gewichtungszuordnungsvorschrift definiert, die jeder Kategorie zumindest einen Gewichtungswert zuordnet, der angibt, wie wahrscheinlich Informationsobjekte, die dieser Kategorie zugeordnet sind, beim nächsten Mal ausgewählt werden.

Gemäß einem speziellen Ausführungsbeispiel der vorliegenden Erfindung werden die Kategoriezuordnungsdaten wiederum durch einen Satz von Kategoriegewichtungen gebildet, die das jeweilige Informationsobjekt den einzelnen Kategorien mit einer jeweiligen Kategoriegewichtung zuordnen. So kann ein Livemitschnitt aus einem Musical beispielsweise als Unterhaltung und als Musik eingestuft werden, gegebenenfalls zu unterschiedlichen Graden bzw. mit unterschiedlicher Kategoriegewichtung. Ein negatives Verhalten des Benutzers wirkt sich deshalb bei diesem Ausführungsbeispiel am meisten für solche Informationsobjekte außer dem Informationsobjekt, zu dessen Information der Benutzer das ablehnende Verhalten gezeigt hat, aus, die derselben bzw. denselben Kategorien zugeordnet sind bzw. genauer mit größter Kategoriegewichtung derselben bzw. denselben Kategoriegewichtungen zugeordnet sind.

Weitere bevorzugte Ausführungsbeispiele der vorliegenden Erfindung werden nachfolgend Bezug nehmend auf die beiliegenden Zeichnungen näher erläutert. Es zeigen :

Fig. 1  ein Blockschaltbild einer Vorrichtung zur Informationswiedergabe gemäß einem Ausführungsbeispiel der vorliegenden Erfindung; und

Fig. 2  eine Prinzipskizze zur Veranschaulichung einer Funktionsweise der Vorrichtung von Fig. 1 gemäß einem speziellen Ausführungsbeispiel der vorliegenden Erfindung.

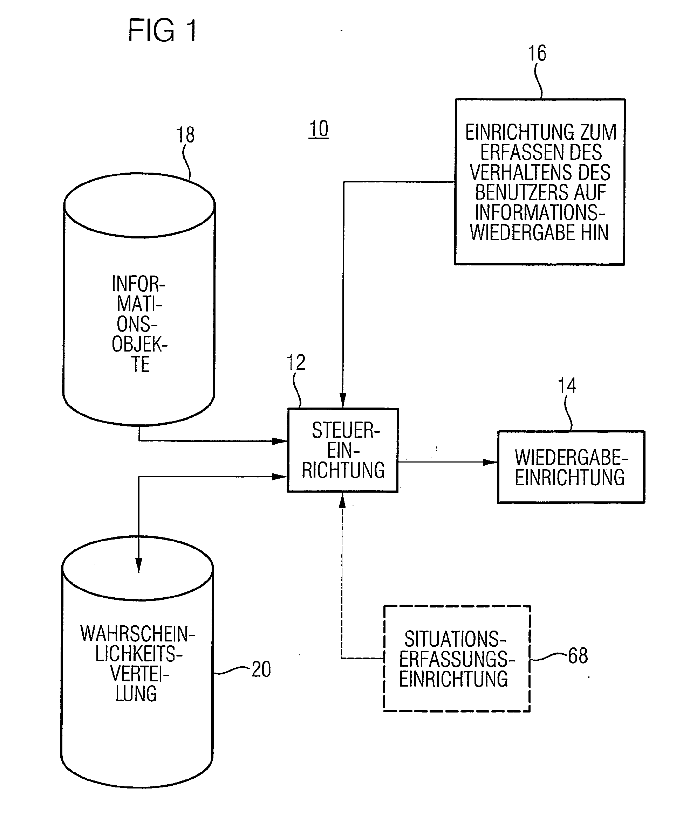

Fig. 1 zeigt zunächst den prinzipiellen Aufbau einer Vorrichtung zur Informationswiedergabe gemäß einem Ausführungsbeispiel der vorliegenden Erfindung.

Wie zu sehen ist, umfasst die Informationswiedergabevorrichtung von Fig. 1, die allgemein mit 10 angezeigt ist, eine Steuereinrichtung 12, eine Wiedergabeeinrichtung 14, eine Einrichtung 16 zum Erfassen eines Verhaltens des Benutzers der Vorrichtung 10 auf eine Informationswiedergabe mittels der Wiedergabeeinrichtung 14 hin, einen Speicher 18 zur Speicherung einer Mehrzahl von Informationsobjekten, in welchen jeweils eine wiedergebbare Information bereitgestellt ist, und einen Speicher 20, in welchem Daten gespeichert sind, die die Steuereinrichtung 12 zur Anpassung bzw. Adaption der Informationsauswahl an die Persönlichkeit des Benutzers benötigt, wie z.B. eine Wahrscheinlichkeitsverteilung, wie sie im Folgenden noch näher erörtert werden wird.

Nach dem im Vorhergehenden der Aufbau der Vorrichtung 10 hinsichtlich seiner Bestandteile beschrieben worden ist, werden im Folgenden dessen Funktionsweise und die Interaktion seiner Bestandteile untereinander beschrieben.

Die Informationswiedergabevorrichtung 10 von Fig. 1 ist dazu vorgesehen, aus der Mehrzahl von Informationsobjekten, die in dem Speicher 18 vorgesehen sind, aufeinanderfolgend, intermittierend oder auch in jeglicher anderer Reihenfolge, Informationsobjekte selbstständig, d.h. ohne unmittelbare Interaktion des Benutzers zum Aussuchen der wiederzugebenden Informationsobjekte, auszuwählen und die in den ausgewählten Informationsobjekten bereitgestellten Informationen wiederzugeben. Die Auswahl wird hierbei durch die Steuereinrichtung 12 übernommen, die hierzu eine Zugriffsmöglichkeit auf die Informationsobjekte in dem Speicher 18 aufweist. Die Wiedergabe wird durch die Wiedergabeeinrichtung 14 übernommen, die hierzu von der Steuereinrichtung 12 angesteuert wird.

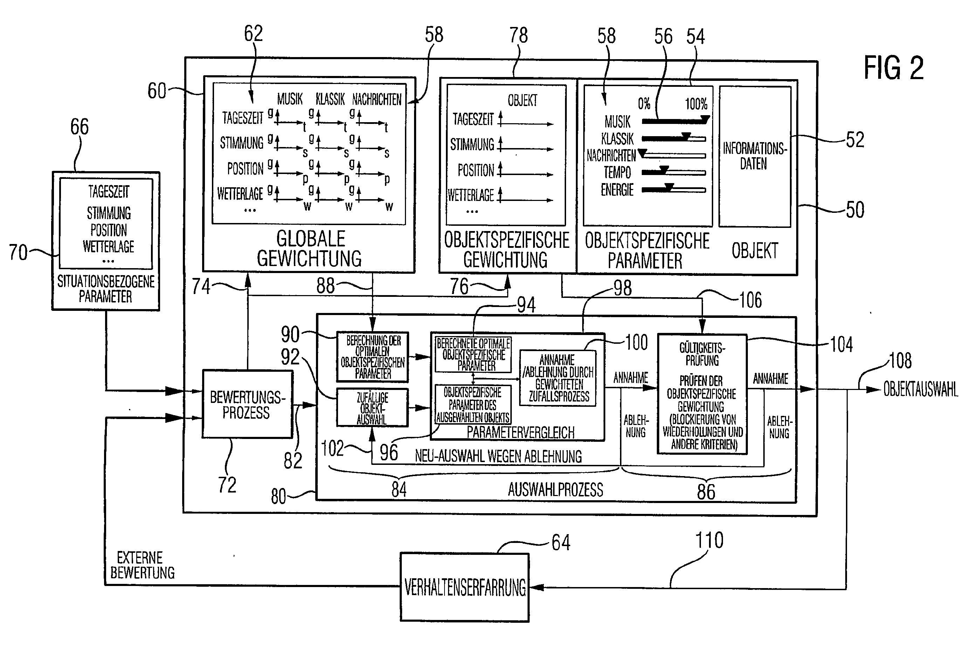

Um die Auswahlvorgänge nicht rein zufällig oder nach Kriterien durchzuführen, die nicht auf die Persönlichkeit des Benutzers abgestimmt sind, ist in dem Speicher 20 eine Wahrscheinlichkeitsverteilung gespeichert, die für jedes Informationsobjekt 18 definiert, wie wahrscheinlich es ist, dass dieses Informationsobjekt bei der Auswahl ausgewählt bzw. angenommen wird (vgl. 106 in Fig. 2). Die Wahrscheinlichkeitsverteilung, die in dem Speicher 20 gespeichert ist, ist adaptiv, so dass die Steuereinrichtung mit dem Speicher 20 nicht nur zum Lesen, sondern auch zum Schreiben wirksam verbunden ist, um diese Wahrscheinlichkeitsverteilung wie weiter unten beschrieben adaptieren zu können. Zur Adaptation der Wahrscheinlichkeitsverteilung 20 verwendet die Steuereinrichtung 12 Daten über das Verhalten des Benutzers auf die wiedergegebenen Informationen der ausgewählten Informationsobjekte hin, die sie von der Einrichtung 16 erhält.

Die Art der Informationen, die in den Informationso-bjekten bereitgestellt sind, die Wiedergabe dieser Informationen in der Wiedergabeeinrichtung 14 und das Verhalten des Benutzers auf die Informationswiedergabe hin können unterschiedlichste Form und Gestalt annehmen, je nachdem, zu welchem Zweck die Informationswiedergabevorrichtung 10 verwendet wird. Um die Beschreibung der Funktionsweise der Vorrichtung 10 von Fig. 1 jedoch besser veranschaulichen zu können, wird im Folgenden davon ausgegangen, dass es sich bei der Informationswiedergabevorrichtung 10 von Fig. 1 um eine solche handelt, die vorgesehen ist, um Audiodaten wiederzugeben, wie z.B. als Radio in einem Fahrzeug. In diesem Fall bestehen beispielsweise die in den Informationsobjekten wiedergegebenen Informationen aus Audiodaten, wie z.B. MPEG-Dateien oder dergleichen.

Die Audiodaten selbst wiederum können von Informationsobjekt zu Informationsobjekt äußerst unterschiedlich sein und beispielsweise Nachrichten, Musikstücke, Werbung, Glossen, Comedy, Verkehrsnachrichten, Hörspiele oder Wetternachrichten betreffen. Um die Fülle von Informationsobjekten deshalb grob einzuteilen bzw. untergliedern zu können und somit Informationsobjekte zu Gruppen zusammenfassen zu können, umfasst jedes Informationsobjekt neben seiner eigentlichen Information auch Kategoriezuordnungsdaten, die jedes Informationsobjekt entweder graduell, nämlich über eine Gewichtung, oder absolut, durch ja oder nein, einer oder mehreren aus einem vorbestimmten Satz von Kategorien zuordnen. Mögliche Kategorieeinteilungen umfassen beispielsweise "Musik", "Klassik", "Nachrichten", "Tempo", "Energie" usw. und/oder die im Vorhergehenden erwähnten Bezeichnungen von unterschiedlichen Arten von Audiodaten, wie sie im Vorhergehenden verwendet worden sind, um die Vielfalt und Mannigfaltigkeit der verschiedenen Audiodaten darzustellen. Der Satz von Kategorien kann hierbei erweiterbar oder fest sein.

Um ein Beispiel zu geben, kann beispielsweise ein Musikstück der Beatles der Kategorien Musik, Tempo und Energie zugeordnet sein. Die einzelnen Zuordnungen könnten wiederum gewichtet sein. So wäre beispielsweise ein Musikstück der Beatles durch die Kategoriezuordnungsdaten der Kategorie "Musik" voll, d.h. zu 100 %, zugeordnet, während es den Kategorien "Tempo" und "Energie" nur zu einem geringen Ausmaß zugeordnet wäre.

In dem Fall einer audiodatenwiedergebenden Informationswiedergabevorrichtung 10 wird die Wiedergabeeinrichtung 14 beispielsweise durch einen geeigneten Lautsprecher gebildet, wie z.B. einen Autolautsprecher oder Kopfhörer. Die Wiedergabe der in den Informationsobjekten bereitgestellten Informationen bzw. Audiodaten erfolgt in diesem Fall unmittelbar an den Benutzer, d.h. Wiedergabeadressat und Ort des Wiedergabeergebnis befinden sich am selben Ort, nämlich beim Benutzer. Wie es Bezug nehmend auf ein weiteres Anwendungsbeispiel der Vorrichtung 10 gezeigt wird, muss dies nicht unbedingt so sein.

Gemäß dem Audiodatenausführungsbeispiel wird nun die Wahrscheinlichkeitsverteilung in dem Speicher 20 durch eine Gewichtungszuordnungsvorschrift definiert, die jeder durch eine Zugehörigkeit zu einer bestimmten Kategorie definierten Gruppe von Informationsobjekten bzw. jeder Kategorie zumindest einen Gewichtungswert zuordnet. Diese Gewichtungswerte verwendet die Steuereinrichtung 12 bei der zufälligen Auswahl des nächsten wiederzugebenden Informationsobjekts aus den Informationsobjekten in dem Speicher 18, indem sie Informationsobjekte wahrscheinlicher auswählt, die einer Kategorie oder Kategorien zugeordnet sind, deren Gewichtungswert gemäß der Gewichtungszuordnungsvorschrift oder Gewichtungszuordnungstabelle in dem Speicher 20 größer ist. Die Steuereinrichtung kann zur Bestimmung der Wahrscheinlichkeitsverteilung, wie sie durch die Gewichtungswerte der Gewichtungszuordnungsvorschrift in dem Speicher 20 definiert wird, ferner, falls vorhanden, die im Vorhergehenden erwähnten Kategoriegewichtungen verwenden, die die Informationsobjekte den einzelnen Kategorien graduell mehr oder weniger zuordnen.

Ferner kann die Steuereinrichtung 12 berücksichtigen, dass manche Kategorien breiter und manche Kategorien enger sind. So trifft beispielsweise die Kategorie "Musik" auf mehr Informationsobjekte zu als die Kategorie "Rock", da sie eine reine Untermenge der Kategorie Musik ist. Insofern trifft aber auch der Gewichtungswert für die Kategorie "Rock" besser auf die ihr angehörenden Informationsobjekte zu als der Gewichtungswert für die Gewichtungskategorie Musik, und dies kann dann durch die Steuereinrichtung 12 durch Kategoriegrößengewichtungswerte berücksichtigt werden, die den einzelnen Kategorien zugeordnet sind, und die ebenfalls bei der Auswahl bzw. zur Definition der Wahrscheinlichkeitsverteilung unter den Informationsobjekten herangezogen wird.

Der Auswahlprozess durch die Steuereinrichtung 12, der, wie im Vorhergehenden beschrieben, zufällig auf der Basis der Wahrscheinlichkeitsverteilung in dem Speicher 20 von der Steuereinrichtung 12 durchgeführt wird, kann auf Anforderung durch den Benutzer hin, bei Erreichen des Endes einer gerade wiedergegebenen Audiodatei oder gesteuert durch ein anderes System, wie z.B. einer die Verkehrdichte überwachenden Einrichtung, die eine Audiowidergabe nur bei geringer Verkehrsdichte zulässt, stattfinden.

Hat die Steuereinrichtung 12 eine Auswahl getroffen, so gibt sie die Audioinformation des ausgewählten Informationsobjekts an die Wiedergabeeinrichtung 14 aus, die die Audioinformation wiederum an den Benutzer wiedergibt.

Würde nun die Wahrscheinlichkeitsverteilung, auf der der Auswahlprozess durch die Steuereinrichtung 12 basiert, durch welchen die Informationsobjekte ausgewählt werden, deren Audioinhalte nacheinander oder intermittierend an den Benutzer ausgegeben bzw. wiedergegeben werden, unverändert bleiben, so bestünde eine große Gefahr darin, dass sich der Benutzer darüber ärgern muss, dass er mit Audioinformationen "belästigt" wird, die er nach seiner Persönlichkeit gar nicht hören möchte. Anders ausgedrückt, lehnt innerlich der Benutzer also einige der wiedergegebenen Informationen ab, während er andere wiederum gut findet bzw. sie oder ihre Wiedergabe begrüßt. Wiederum anders ausgedrückt, bewertet der Benutzer der Vorrichtung 10 jede wiedergegebene Information bzw. das entsprechende Informationsobjekt mit einer externen Bewertung, die mit "gut", "schlecht" oder "mittel" umschrieben werden könnte. Um nun die innerliche Bewertung des Benutzers für die Vorrichtung 10 erfassbar zu machen und als Adaptionsrückkopplungsgröße verwenden zu können, erfasst die Einrichtung 16 das Verhalten des Benutzers auf die Informationswiedergabe hin. Dieses äußere Verhalten des Benutzers kann dann bewertet oder interpretiert werden, nämlich als ein ablehnendes Verhalten des Benutzers, was heißt, dass dem Benutzer die wiedergegebene Information nicht gefiel, oder als zustimmendes Verhalten, was heißt, dass der Benutzer die wiedergegebene Information begrüßt hat bzw. Gefallen an ihr gefunden hat.

Die Einrichtung 16 kann einfachsten Falls aus einem Knopf bestehen, den der Benutzer betätigen kann, um der Vorrichtung 10 anzuzeigen, dass ihm die wiedergegebene Information nicht gefällt. Die Betätigung könnte dann gleichzeitig von der Steuereinrichtung 12 dazu verwendet werden, dass sie ansprechend hierauf eine erneute Auswahl eines Informationsobjekts basierend auf einer, wie im Folgenden noch zu erörtern, adaptierten Wahrscheinlichkeitsverteilung vornimmt. Als Betätigungseinrichtung könnte freilich auch eine andere Vorrichtung als ein Knopf verwendet werden, wie z.B. ein Schalter, ein Hebel, eine Spracheingabe oder dergleichen. Jedenfalls würde die Steuereinrichtung 12 eine bestimmte Betätigung als ein ablehnendes Verhalten des Benutzers auf die laufende Wiedergabe interpretieren können, gegebenenfalls sogar mit einer graduellen Gewichtung. Beispielsweise könnte die Steuereinrichtung die Zeitdauer, bis zu der der Benutzer seit der Wiedergabe der aktuellen Audioinformation den im vorhergehenden erwähnten Knopf drückt, heranziehen, um darauf rückzuschließen, wie sehr dem Benutzer die gerade wiedergegebene Audioinformation "missfällt".

Hat die Steuereinrichtung 12 ein ablehnendes Verhalten festgestellt, so versucht sie das Wahrscheinlichkeitsmodell in dem Speicher 20 derart zu adaptieren, dass in Zukunft der Auswahlprozess besser an den Geschmack und die Vorlieben des Benutzers angepasst ist. Ansprechend auf das Erfassen eines ablehnenden Verhaltens des Benutzers reduziert die Steuereinrichtung 12 deshalb für jede Kategorie, der das Informationsobjekt zugeordnet ist, auf welches sich die Ablehnung des Benutzers bezog, den Gewichtungswert für diese Kategorie, und zwar in dem Fall der Verwendung von Kategoriegewichtungen in den Kategoriezuordnungsdaten des soeben wiedergegebenen Informationsobjekts mit einem Grad, der von der Kategoriegewichtung abhängt, mit der dieses Informationsobjekt der einzelnen Kategorie zugeordnet ist. Auf diese Weise werden z.B. beim nächsten Mal Informationsobjekte dieser Kategorien weniger wahrscheinlich ausgewählt werden, da die Gewichtungswerte für diese Kategorien im Vergleich zu den Gewichtungswerten für andere Kategorien reduziert worden sind.

Obwohl es möglich ist, nur ablehnende Verhalten des Benutzers zu erfassen, ist es möglich, auch zusätzlich oder alternativ zustimmende Verhalten des Benutzers in der Adaptation der Wahrscheinlichkeitsverteilung in dem Speicher 20 zu verwenden. Wieder Bezug nehmend auf das vorhergehende Ausführungsbeispiel für die Einrichtung 16, nämlich dem Knopf als Einrichtung 16, könnte die Steuereinrichtung 12 beispielsweise das Ausbleiben eines Knopfdruckes während der Widergabe einer bestimmten Audioinformation als zustimmendes Verhalten werten, d.h. derart, dass der Benutzer die Audioinformation, während deren Wiedergabe kein Knopfdruck erfolgte, begrüßt hat bzw. an ihr Gefallen gefunden hat. In dem Fall eines zustimmenden Verhaltens geht die Steuereinrichtung 12 dann in zu dem vorhergehenden Fall umgekehrter Weise vor: Sie erhöht die Gewichtungswerte der Kategorien, denen das Informationsobjekt zugeordnet ist, auf welches sich das zustimmende Verhalten des Benutzers bezog, gegebenenfalls unter Berücksichtigung der Kategoriegewichtungen des aktuellen Informationsobjektes. Ein weitere Möglichkeit bestünde darin, als Einrichtung 16 zwei Skip-Tasten zu verwenden. Mit der Betätigung der einen Skip-Taste, z.B. der Nach-Rechts-Skip-Taste, würde die Wiedergabe des aktuellen Objekts abgebrochen werden, was als ablehendendes Verhalten für das aktuelle Informationsobjekt gewertet würde. Mit der Betätigung der anderen Skip-Taste, z.B. der Nach-Links-Skip-Taste, würde die Wiedergabe des aktuellen Objekts abgebrochen und die Widergabe des vor dem aktuellen Objekt wiedergegebenen Objekts wiederholt werden, was als zustimmendes Verhalten für das vor dem aktuellen Objekt wiedergegebene Informationsobjekt gewertet würde.

Das vorhergehende Beispiel für die Einrichtung 16, nämlich ein Knopf zur Erfassung des Verhaltens des Benutzers auf die Informationswiedergabe hin, hat gezeigt, dass sowohl eine aktive Reaktion des Benutzers auf eine Informationswiedergabe hin als auch das Unterlassen einer bestimmten Reaktion auf die Informationswiedergabe hin als ablehnendes bzw. zustimmendes Verhalten gewertet werden kann. Obwohl im Vorhergehenden das Unterlassen als zustimmendes Verhalten gewertet worden ist, während die aktive Reaktion als Ablehnung interpretiert worden ist, ist eine umgekehrte Vorgehensweise oder eine gemischte Vorgehensweise ebenfalls möglich. So könnte die Audiodatenwiedergabevorrichtung 10 als Radio in einem Auto auch mit einem Knopf versehen sein, der dazu vorgesehen ist, um von dem Benutzer für den Fall gedrückt zu werden, dass er zum Ausdruck bringen möchte, dass er die soeben wiedergegebene Audiodatei gerne hört. Mehrmaliges Drükken dieses Knopfes könnte dann zu einer graduellen Bewertung in verschiedenen Stufen verwendet werden. In dem Fall einer Spracheingabe zur Bestimmung des Verhaltens könnten Bewertungen durch den Benutzer mündlich eingegeben werden, wie z.B. mit "gut", "schlecht" usw.

Im Vorhergehenden wurde die Informationswiedergabevorrichtung 10 von Fig. 1 vor dem Hintergrund der Wiedergabe von Audiodaten beschrieben. Im folgenden wird die Informationswiedergabevorrichtung 10 von Fig. 1 vor dem Hintergrund beschrieben, dass dieselbe im Rahmen eines Home-Replenishment-Systems verwendet wird, nämlich z.B. zur Durchführung der Nachbestellungen ausgegangener bzw. sich dem Ende neigender Lebensmittel. In diesem Fall umfassen die Informationsobjekte Informationen, die bestimmte Anweisungen enthalten, nämlich Anweisungen über die Beschaffung bzw. Nachbestellung bestimmter Lebensmittel. Die Information eines in dem Auswahlprozess durch die Steuereinrichtung 12 ausgewählten Informationsobjektes gibt die Steuereinrichtung 12 an die Wiedergabeeinrichtung 14 weiter, die in diesem Fall beispielsweise als Modem, Internetanschluss, Fax oder eine andere Kommunikationsvorrichtung ausgebildet ist und den durch die Information definierten Auftrag an einen Händler weitergibt, der wiederum das gemäß dem Auftrag bestellte Lebensmittel an die Adresse des Benutzers der Vorrichtung 10 bzw. des Höme-Replenishment-Systems sendet, beispielsweise per Post oder einem anderen Lieferdienst. Alle an den Benutzer gelieferten und durch das Home-Replenishment-System bestellten Lebensmittel gelangen schließlich in den Kühlschrank (nicht gezeigt) des Benutzers. In dem Fall der Verwendung der Informationswiedergabevorrichtung 10 zur Lebensmittelbestellung fallen folglich Ort des Wiedergabeempfängers, nämlich des Händlers, und Ort des Wiedergabeergebnisses, nämlich der Kühlschrank bzw. der Benutzer, auseinander. Die Verbindung der beiden Orte erfolgt über den Lieferdienst und die Bestell-Verbindung.

Gemäß dem Home-Replenishment-System-Ausführungsbeispiel sorgt nun die Informationswiedergabevorrichtung 10 für ein ständiges Auffüllen des Kühlschranks des Benutzers. Damit die Lebensmittel, die in dem Kühlschrank vorhanden sind, an den Geschmack des Benutzers angepasst sind, verwendet die Steuereinrichtung 12 zur Auswahl unter den Informationsobjekten in dem Speicher 18 zufällig unter Verwendung der Wahrscheinlichkeitsverteilung in dem Speicher 20 aus und adaptiert die Wahrscheinlichkeitsverteilung 20 auf der Basis des Benutzerverhaltens, wie es im Folgenden beschrieben wird. Die Bestellungen, die in den Informationsobjekten in dem Speicher 18 bereitgestellt sind, betreffen die jeweils Bestellungen unterschiedlicher Lebensmittel, die in bestimmte Kategorien eingeteilt werden können, wie z.B. in Kategorien "Obst", "süß", "sauer", "fettig", "leicht", "indisch", "Gemüse", "asiatisch", "Diabetiker-geeignet", "vegetarisch" usw.

Jedes Informationsobjekt ist nun einer oder mehreren dieser Kategorien mehr oder weniger zugeordnet. In dem Speicher 20 ist nun jeder Kategorie ein Gewichtungswert zugeordnet, wobei alle Gewichtungswerte die Wahrscheinlichkeitsverteilung unter den Informationsobjekten in dem Speicher 18 definieren, gegebenenfalls zusammen mit den Kategoriegewichtungen der Kategoriezuordnungsdaten in den Informationsobjekten und den im vorhergehenden erwähnten die Kategoriegröße berücksichtigenden Gewichtungen.

Die Einrichtung 16 zum Erfassen des Verhaltens des Benutzers auf die Informationswiedergaben hin umfasst beispielsweise die Entnahme der Lebensmittel aus dem Kühlschrank. Hierzu umfasst der Kühlschrank beispielsweise als Einrichtung 16 einen Strichcodeleser, an welchem der Benutzer ein Lebensmittel vorbeiführt, um das Herausnehmen dieses Lebensmittels aus dem Kühlschrank anzuzeigen. Die Einrichtung 16 kann aber auch als Kamera mit einer Objekterkennung ausgestattet sein. Jedenfalls ist die Steuereinrichtung 12 stets in Kenntnis darüber, welche Lebensmittel sich in dem Kühlschrank befinden, d.h. welche gerade entnommen und welche gerade in den Kühlschrank hinein- oder zurückgestellt werden.

Das Verhalten des Benutzers, das derselbe auf die Bestellungen hin an den Tag legt, und wie es durch die Einrichtung 16 erfasst wird, verwendet die Steuereinrichtung 12, um die Wahrscheinlichkeitsverteilung in dem Speicher 20 bzw. die Gewichtungswerte zu ändern. So schließt beispielsweise die Steuereinrichtung 12 aus dem Umstand, dass Obst immer im Kühlschrank liegen bleibt und schlecht wird, dass die Gewichtungswerte für die Kategorien "Obst", "Zitrusfrüchte" usw. zu reduzieren ist, so dass die Wahrscheinlichkeitsverteilung derart adaptiert wird, dass in nachfolgenden Bestellungen Obst und dergleichen weniger wahrscheinlich bestellt wird. Umgekehrt kann die Steuereinrichtung 12 beispielsweise daraus, dass der Benutzer jedes Mal, sobald Joghurt in den Kühlschrank geliefert wird, diesen sofort aus dem Kühlschrank entnimmt, auf ein zustimmendes Verhalten des Benutzers schließen und deshalb ansprechend hierauf die Gewichtung für die Kategorie "Joghurt", aber auch die Gewichtung für beispielsweise die Kategorie "Milchprodukte" oder dergleichen in dem Speicher 20 erhöhen.

Aus dem letzten Ausführungsbeispiel Bezug nehmend auf Fig. 1 wurde deutlich, dass die Einrichtung 16 auf äußerst unterschiedliche Weise ausgeführt sein kann. Allgemein kann man sagen, dass die Einrichtung 16 in der Lage sein sollte, das Verhalten des Benutzers in Signale umzusetzen, aus denen die Steuereinrichtung 12 auf ein zustimmendes und/oder ablehnendes Verhalten des Benutzers bezüglich wiedergegebener Informationen rückschließen kann. Dazu sollte die Einrichtung 16 in der Lage sein, wie im Vorhergehenden beschrieben, für bestimmte Reaktionen bzw. Unterlassungen des Benutzers auf die Informationswiedergabe hin empfindlich zu sein, um bei Erfassung von Reaktionen bzw. Unterlassungen solcher Art auf wiedergegebene Informationsobjekte hin auf ein ablehnendes bzw. zustimmendes Verhalten rückschließen zu können.

Bei der vorhergehenden Beschreibung wurde davon ausgegangen, dass für jede Kategorie lediglich ein Gewichtungswert in dem Speicher 20 gespeichert ist. Im Enddefekt bedeutet dies, dass bei der vorhergehenden Funktionsbeschreibung der Vorrichtung von Fig. 1 davon ausgegangen worden ist, dass zur Adaption der Informationsobjektauswahl lediglich eine adaptive Wahrscheinlichkeitsverteilung bzw. eine adaptive Tabelle von Gewichtungswerten verwendet wird. Für viele Anwendungen mag diese Vorgehensweise zu einem zufriedenstellenden Ergebnis führen, nämlich dann, wenn die Vorlieben des Benutzers unabhängig von der Situation, in welcher der Benutzer durch sein Verhalten seine Ablehnung oder Zustimmung zum Ausdruck bringt, immer gleich sind. Dies ist jedoch nicht immer der Fall. Bei dem vorhergehenden Anwendungsbeispiel, bei dem die Vorrichtung von Fig. 1 als Audioinformationswiedergabevorrichtung verwendet worden ist, ist es beispielsweise möglich und auch wahrscheinlich, dass ein Benutzer morgens, beispielsweise im Auto sitzend auf dem Weg zur Arbeit, andere Vorlieben bzw. Wünsche aufweist als nachmittags, wenn er von der Arbeit kommt und müde ist. In diesem Fall wäre das Adaptionsergebnis mit lediglich einem Gewichtungswert pro Kategorie bzw. mit lediglich einer adaptiven Wahrscheinlichkeitsverteilung nicht ausreichend, da sich die Wahrscheinlichkeitsverteilung gar nicht an feste Vorlieben oder Wünsche des Benutzers adaptieren kann, die nämlich vormittags und nachmittags gar nicht gleich sind. Deshalb sind bei dem nachfolgenden Ausführungsbeispiel für eine Funktionsweise der Vorrichtung nach Fig. 1 in Endeffekt für jede Kategorie mehrere Gewichtungswerte vorgesehen bzw. sind mehrere adaptive Wahrscheinlichkeitsverteilungen vorgesehen, die für unterschiedliche Situationen des Benutzers vorgesehen sind. Ein situationsabhängiger Parameter, der geeignet ist, um die Situation, in der sich der Benutzer gerade befindet, zu beschreiben, ist bei dem vorhergehenden Audiowiedergabebeispiel beispielsweise die Zeit. Bei dem Home-Replenishment-System-Beispiel, wie es im vorhergehenden beschrieben worden ist, ist beispielsweise eine Unterscheidung zwischen "Sommer" und "Winter" sinnvoll, da es durchaus möglich und wahrscheinlich ist, dass sich die Ernährungsvorlieben des Benutzers im Sommer und Winter unterscheiden, da es häufig vorkommt, dass man im Sommer leichter isst, beispielsweise mehr Salat, während man im Winter deftiger isst, beispielsweise mehr Braten. Die Essgewohnheiten können sich beispielsweise auch zwischen Werktagen und Wochenendtagen unterscheiden. Weitere situationsbezogene Parameter können die Jahreszeit, der Wochentag und weitere Umgebungsparameter, die relevant für die jeweilige Anwendung sind, sein.

Bezug nehmend auf Fig. 2 wird deshalb die Funktionsweise der Vorrichtung von Fig. 1 Bezug nehmend auf ein weiteres Ausführungsbeispiel detaillierter beschrieben, bei dem dieselbe als Audiowiedergabevorrichtung wirkt. Gemäß diesem Ausführungsbeispiel umfasst jedes Informationsobjekt 50 unter den Informationsobjekten, die in dem Speicher 18 gespeichert sind, neben Informationsdaten 52, in welchen die eigentliche Information des Informationsobjekts 50 bereitgestellt sind, objektspezifische Parameter 54, die den im Vorhergehenden Kategoriezuordnungsdaten entsprechen, die die eigentliche Information in den Informationsdaten 52 beschreiben, und die die ebenfalls im Vorhergehenden erwähnten Kategoriegewichtungen 56 aufweisen, von denen jede einer bestimmten der Kategorien 58 zugeordnet ist und für diese angibt, wie sehr das Informationsobjekt 50 der dieser Kategorie 58 zugeordnet ist. Die in Fig. 2 exemplarisch aufgelisteten Kategorien sind Musik, Klassik, Nachrichten, Tempo und Energie. Die Kategoriegewichtungen 56 sind exemplarisch in Prozent angegeben obwohl andere Darstellungen ebenfalls möglich sind.

Zur Festlegung der adaptiven Wahrscheinlichkeitsverteilung dienen globale Gewichtungsdaten 60, die in dem Speicher 20 gespeichert sind. Diese globalen Gewichtungsdaten umfassen für jede Kategorie 58 nicht nur einen Gewichtungswert, wie es im Vorhergehenden Bezug nehmend auf Fig. 1 beschrieben worden ist, sondern eine Mehrzahl von Gewichtungswerten, die unterschiedlichen möglichen Werten eines situationsbezogenen Parameters zugeordnet sind. Um die Situationen, in welchen sich der Benutzer befindet, noch genauer einteilen zu können, sind gemäß dem Ausführungsbeispiel von Fig. 2 sogar mehrere situationsbezogene Parameter 62 vorgesehen, und für jeden dieser situationsbezogenen Parameter 62 umfassen die globalen Gewichtungsdaten 60 in dem Speicher 20 eine Mehrzahl von Gewichtungswerten pro Kategorie 58, nämlich einen Gewichtungswert pro möglichen Quantisierungswert des jeweiligen situationsbezogenen Parameters. Exemplarische Beispiele für situationsbezogene Parameter 62 sind in Fig. 2 mit "Tageszeit", "Stimmung", "Position" und "Wetterlage" angegeben. Sei beispielsweise $N_K$ die Anzahl an Kategorien 58, $N_{SP}$ die Anzahl an situationsbezogenen Parametern 62 und $n_{SP}(1)$ die Anzahl an unterscheidbaren Quantisierungswerten für den ersten situationsbezogenen Parameter, $n_{SP}(2)$ die Anzahl an Quantisierungen für den zweiten situationsbezogenen Parameter usw., dann bestünden die globalen Gewichtungsdaten 60 aus einer Anzahl von

$$N_K \cdot \sum_{i=1}^{N_{SP}} n_{SP}(i)$$

Gewichtungswerten.

Anstatt der tabellarischen Speicherung der globalen Gewichtungsdaten 60 wäre es, wie in Fig. 2 angedeutet, auch möglich, dass für jedes Tupel aus Kategorie 58 und situationsbezogenem Parameter 62 ein analytischer Funktionsverlauf gespeichert wird, der vom jeweiligen situationsbezogenen Parameter t für die Tageszeit, s für die Stimmung, p für die Position bzw. w für die Wetterlage auf einen Gewichtungswert g abbildet.

Nachdem nun im Vorhergehenden Bezug nehmend auf Fig. 2 die Unterschiede im Hinblick auf die Definition der Wahrscheinlichkeitsverteilung durch Gewichtungswerte in dem Speicher 20 zu den Bezug nehmend auf Fig. 1 beschriebenen Ausführungsbeispielen erörtert worden sind, wird im Folgenden die Funktionsweise der Vorrichtung von Fig. 1 im Rahmen des Ausführungsbeispiels von Fig. 2 beschrieben. Auch bei dem Ausführungsbeispiel von Fig. 2 ist die Vorrichtung 10 dazu vorgesehen, aufeinanderfolgend Informationsobjekte aus der Mehrzahl von Informationsobjekten in dem Speicher 18 unter zu Hilfenahme einer adaptierten Wahrscheinlichkeitsverteilung, wie sie durch die globale Gewichtung 60 definiert ist, zufällig auszuwählen und auf der Grundlage des Benutzerverhaltens auf die Wiedergabe der Informationen in den ausgewählten Informationsobjekten hin die globalen Gewichtungsdaten 60 zu adaptieren.

Im Unterschied zu den Ausführungsbeispielen, die unmittelbar Bezug nehmend auf Fig. 1 beschrieben worden sind, erfasst die Vorrichtung 10 gemäß dem Ausführungsbeispiel von Fig. 2 zusammen mit den Benutzerverhalten auf die Informationswiedergabe hin, wie sie in einem Benutzerverhaltenerfassungsprozess 64 erfasst werden, jedoch auch die augenblicklichen situationsbezogenen Parameter in einem Situationserfassungsprozess 66. Die Erfassung der situationsbezogenen Parameter wird durch eine Situationsparametererfassungseinrichtung 68 durchgeführt, die in Fig. 1 mit gestrichelten Linien dargestellt ist. Das Ergebnis des Situationserfassungsprozesses 66 sind erfasste Werte für die situationsbezogenen Parameter, hier also die augenblickliche Tageszeit, die augenblickliche Stimmung des Benutzers, die augenblickliche Position des Benutzers und die augenblickliche Wetterlage. Die Vorrichtung 68 kann hierfür eine Uhr zur Erfassung der Tageszeit, einen Sprachanalysator mit Mustererkennung, eine Kameravorrichtung, einen Herzfrequenzsensor am Lenkrad, einen Stimmrekorder oder eine Einrichtung zur Auswertung von Verhaltensmustern ganz allgemein zur Erkennung der Stimmung des Benutzers, einen GPS-Sensor zur Erfassung der Position des Benutzers und einen kombinierten Helligkeits-, Feuchtigkeits-, Luftdruck- und Windgeschwindigkeitssensor zur Erfassung der Wetterlage aufweisen. Die augenblicklichen Werte der situationsbezogenen Parameter sind in Fig. 2 mit 70 angezeigt.

Sobald nun die Verhaltenserfassung 64 ein ablehnendes oder zustimmendes Verhalten des Benutzers erfasst, das ja eine "externe Bewertung" der augenblicklichen Auswahl unter den Informationsobjekten 50 darstellt, geht diese externe Bewertung zusammen mit den dazugehörigen aktuellen Werten 70 der situationsbezogenen Parameter in einen Bewertungsprozess 72 ein. Der Bewertungsprozess 72 übernimmt die im Vorhergehenden Bezug nehmend auf Fig. 1 bereits im Rahmen der vorhergehenden Ausführungsbeispiele beschriebene Adaption der Gewichtungswerte. Die Adaptation der Gewichtungswerte auf der Basis der externen Bewertung und der aktuellen Werte 70 der situationsbezogenen Parameter ist durch einen Wirkpfeil 74 veranschaulicht. Die Adaptation 74 wird nun auf folgende Weise durchgeführt. Ergab die Verhaltenserfassung 64 eine negative externe Bewertung bzw. ein ablehnendes Verhalten zu dem Informationsobjekt 50, dessen Informationsdaten 52 gerade wiedergegeben werden, so verwendet der Bewertungsprozess 72 die objektspezifischen Parameter 54 dieses aktuellen Informationsobjekts 50 und die aktuellen Werte 70 der situationsbezogenen Parameter, um die globale Gewichtungstabelle 60 zu adaptieren.

Insbesondere wirkt der Bewertungsprozess 72 in dem Fall eines ablehnenden Verhaltens des Benutzers derart auf die globale Gewichtungstabelle 60, dass anschließend Informationsobjekte mit zu dem aktuellen Informationsobjekt 50 ähnlichen objektspezifischen Parametern 54 weniger wahrscheinlich ausgewählt werden, aber nur insoweit, solange die Situation die gleiche bzw. ähnlich ist, d.h. für alle Fälle, bei denen die situationsbezogenen Parameter zu den aktuellen Werten 70 ähnliche Werte aufweisen, bzw. nur für solche Gewichtungswerte in dem Speicher 20, die Situationsparameterwerten zugeordnet sind, die zu den aktuellen 70 gleich oder ähnlich sind. Noch etwas spezifischer ausgedrückt reduziert der Bewertungsprozess 72 unter allen Gewichtungswerten, die ein und derselben Kategorie 58 und ein und demselben situationsbezogenen Parameter 62 zugeordnet sind, diejenigen am meisten, die dem aktuellen Wert dieses situationsbezogenen Parameters am nächsten sind. Anders ausgedrückt nimmt die Auswirkung der Adaptation aufgrund des ablehnenden Verhaltens des Benutzers mit zunehmender Abweichung der Situation, auf die sich der jeweilige Gewichtungswert bezieht, von der aktuellen Situation 70 ab. Dies trägt dem Umstand Rechnung, dass ein Benutzer, der beispielsweise morgens eine negative Entscheidung für ein Rock-Musikstück getroffen hat, und zwar beispielsweise um 8 Uhr morgens, diese Entscheidung wahrscheinlich auch um 9 Uhr und vielleicht auch noch um 10 Uhr getroffen hätte; aber beispielsweise mittags, in der Arbeitsmittagspause, wird er vielleicht wieder Rock hören wollen. Das ablehnende Verhalten des Benutzers strahlt also bei der Adaption 74 etwas aus, um auch noch auf Gewichtungswerte zu wirken, die ähnliche Situationen betreffen. Auf diese Weise kann die Adaption beschleunigt werden.

Innerhalb der Gewichtungswerte, die dieselbe Situation, d.h. denselben möglichen Wert eines jeweiligen situationsbezogenen Parameters 62, betreffen, reduziert der Bewertungsprozess 72 diejenigen Gewichtungswerte am meisten, die sich auf eine Kategorie beziehen, der das aktuelle Informationsobjekt 50 aufgrund seiner objektspezifischen Parameter 54 am meisten zugeordnet ist, d.h. dessen Kategoriegewichtung 56 in den objektspezifischen Parametern 54 dieses Objekts 50 am größten ist. Dies trägt dem Umstand Rechnung, dass ein ablehnendes Verhalten zu einem Rock-Musikstück nicht dazu führen soll, dass Nachrichten weniger oft gespielt werden, sondern eben vornehmlich, dass Rock-Stücke und ähnlich energiereiche Musikstücke nicht mehr so wahrscheinlich gespielt werden sollen. Ein anderes Beispiel wäre die Ablehnung eines Musikstückes, das zu 100% dem Pop zugeordnet werden kann, aber auch einen 20% Jazz-Einfluss aufweist. Die Gewichtung wirkte in diesem Beispiel auf die globale Jazz-Bewertung nur zu 20%. Bei der Adaption 74 können ferner noch, wie im Vorhergehenden beschrieben, Gewichtungen eine Rolle spielen, die den Kategorien 58 fest zugeordnet sind, um zu berücksichtigen, dass sich manche Kategorien auf eine Vielzahl von Objekten beziehen, während sich manche Kategorien lediglich auf eine kleinere Gruppe von Objekten beziehen können, weil sie reine Untergruppen zu der ersteren sind und damit spezifischer.

In dem Fall einer positiven externen Bewertung bzw. eines zustimmenden Verhaltens des Benutzers verhält sich der Bewertungsprozess 72 bei der Adaptation 74 genau umgekehrt zu der vorhergehenden Beschreibung, nämlich indem die Werte erhöht statt verringert werden, und zwar in der gleichen Weise, nämlich um so mehr, je näher der Wert des situationsbezogenen Parameters, auf den sich der jeweilige Gewichtungswert bezieht, dem aktuellen Wert 70 kommt, und um so mehr, je größer die Kategoriegewichtung 56 für die Kategorie, auf die sich der jeweilige Gewichtungswert bezieht, in den objektspezifischen Parametern 54 des Objekts 50, auf die sich das zustimmende Verhalten bezieht, ist.

Bei der weiteren Beschreibung von Fig. 2 wird davon ausgegangen, dass zur Verhaltenserfassung 64 eine Verhaltenserfassungseinrichtung 16 verwendet wird, die als Knopf ausgestaltet ist, der vom Benutzer verwendet wird, um die Wiedergabe eines aktuellen Informationsobjekts abzubrechen und damit ein ablehnendes Verhalten zum Ausdruck zu bringen. Als positives Verhalten wird es bewertet, wenn der Benutzer während des Abspielens eines Informationsobjekts den Knopf nicht betätigt.

Drückt nun der Benutzer den Knopf der Verhaltenserfassungseinrichtung 16, so trägt der Bewertungsprozess 72 dies im Rahmen einer Aktualisierung 76 in einer objektspezifischen Gewichtungstabelle 78 ein, die beispielsweise zusammen mit der globalen Gewichtungstabelle 60 in dem Speicher 20 gespeichert ist. In der objektspezifischen Gewichtungstabelle 78 speichert der Bewertungsprozess 72 ablehnendes Verhalten des Benutzers. Insbesondere trägt der Bewertungsprozess 72 bei ablehnendem Verhalten des Benutzers einen Index für das Informationsobjekt 50, auf das sich das ablehnende Verhalten bezog, zusammen mit den aktuellen Werten 70 der situationsbezogenen Parameter, an denen das ablehnende Verhalten stattfand, in die objektspezifische Gewichtungstabelle 78 ein. Das Mitprotokollieren der ablehnenden Verhalten dient der schnelleren Anpassung des Informationsobjektauswahlprozesses, wie es im Folgenden noch näher erörtert werden wird. Die Tabelle 78 ist in ihrem Umfang beschränkt. Der Bewertungsprozess 72 verdrängt deshalb bei Eintrag einer aktuellen ablehnenden Verhaltensweise des Benutzers eine alte Eintragung einer früheren ablehnenden Verhaltensweise mittels einer geeigneten Verdrängungsstrategie, wie z.B. einer FIFO (first in first out = zuerst hinein, zuerst hinaus) Strategie oder dergleichen. Der Umfang der Tabelle 78 kann beispielsweise 1.000 Einträge zu ablehnenden Verhalten umfassen.

Wie im Vorhergehenden angedeutet wird, im Folgenden davon ausgegangen, dass der Benutzer bei dem Ausführungsbeispiel von Fig. 2 eine Ablehnung durch Knopfdrücken zum Ausdruck bringt. Der Knopfdruck bewirkt dann die im Vorhergehenden erwähnten Aktualisierungen 74 und 76. Daneben aber löst der Knopfdruck den nächsten Auswahlprozess 80 aus, da ja der Benutzer durch Knopfdruck nicht nur ein ablehnendes Verhalten zum Ausdruck bringt, sondern auch dem System mitteilt, dass dasselbe die aktuelle Wiedergabe stoppen und unterbrechen und dafür ein neues Informationsobjekt wiedergeben soll. Die Auslösung per Knopfdruck ist in Fig. 2 mit dem Pfeil 82 angedeutet. Der Auswahlprozess 80 von Fig. 2 ist ein zweistufiger Auswahlprozess. Die erste Stufe, in Fig. 2 mit 84 angezeigt, entspricht dem schon Bezug nehmend auf Fig. 1 beschriebenen Auswahlprozess auf der Grundlage der globalen Gewichtung 60. Die zweite Stufe, in Fig. 2 mit 86 angezeigt, basiert auf der objektspezifischen Gewichtung 78.

Die erste Stufe 84 des Auswahlprozesses 80 wird gemäß dem Ausführungsbeispiel von Fig. 2 durch die Steuereinrichtung 12 auf die folgende Weise ausgeführt. Zunächst zieht die Steuereinrichtung 12 die globalen Gewichtungsdaten heran (88), um in einem Berechnungsprozess 90 solche objektspezifischen Parameter zu berechnen, denen gemäß den globalen Gewichtungsdaten 60 die höchste Wahrscheinlichkeit zugeordnet ist. Anders ausgedrückt berechnet die Steuereinrichtung 12 im Berechnungsprozess 90 einen Satz von Kategoriegewichtungen 56 derart, dass diesem Satz der durch die globalen Gewichtungsdaten 60 definierten Wahrscheinlichkeitsverteilung zur Folge die höchste Auswahlwahrscheinlichkeit zugeordnet ist, und zwar bezogen auf die aktuellen Werte 70 der situationsbezogenen Parameter. Gäbe es unter den Informationsobjekten in dem Speicher 18 tatsächlich ein solches Objekt mit solchen objektspezifischen Parametern, so würde dies also am wahrscheinlichsten akzeptiert werden, berücksichtigt man die augenblickliche Situation. In einer anderen Situation freilich würde bei gleichen globalen Gewichtungsdaten der Berechnungsprozess 90 zu einem anderen Satz führen. Der entstehende Satz von Kategoriegewichtungen zeigt somit anders ausgedrückt einen situationsbezogenen Ablehnungs-/Akzeptierungsgrad jeder Kategoriezuordnung an.

Unabhängig hiervon trifft die Steuereinrichtung 12 in einem Zufallsprozess 92 eine zufällige Auswahl unter den Informationsobjekten in dem Speicher 18. Der Zufallsprozess 92 wählt jedes Informationsobjekt beispielsweise mit gleicher Wahrscheinlichkeit aus. Es könnte jedoch auch eine andere Wahrscheinlichkeitsverteilung vorgesehen für Schritt 92 sein, die im Unterschied zu der adaptiven Wahrscheinlichkeitsverteilung jedoch fest ist.

Die beiden Prozesse 90 und 92 führen zu zwei Sätzen von Kategoriegewichtungen, nämlich einem berechneten optimalen objektspezifischen Parametersatz bzw. einem optimalen Satz 94 von Kategoriegewichtungen aus dem Berechnungsprozess 90, der, wie oben beschrieben, situationsabhängig ist, und einem Satz 96 von Kategoriegewichtungen, der den objektspezifischen Parametern 54 des in dem Zufallsprozess 92 ausgewählten Informationsobjekts 50 entspricht. Die beiden Sätze 94 und 96 sind die Eingangsdaten für einen Parametervergleich 98, den die Steuereinrichtung 12 durchführt, um die erste Stufe 84 des Auswahlprozesses 80 abzuschließen. Insbesondere wird bei dem Parametervergleich 98 aus den beiden Sätzen 94 und 96 durch beispielsweise skalare Multiplikation der beiden Kategoriegewichtungsvektoren 94 und 96 ein Wahrscheinlichkeitswert gebildet und in einem Zufallsprozess 100 herangezogen, um basierend auf diesem Wahrscheinlichkeitswert das in dem Zufallsprozess 92 ausgewählte Objekt zufällig anzunehmen oder abzulehnen. Die Wahrscheinlichkeit der Annahme des in dem Zufallsprozess 92 ausgewählten Informationsobjekts ist dabei um so höher, je mehr die objektspezifischen Parameter 96 des ausgewählten Objekts den optimalen objektspezifischen Parametern 94 entsprechen.

In dem Fall, dass der Zufallsprozess 100 des Parametervergleichs 98 zu einer Ablehnung führt, werden die Prozesse 90 und 92 erneut durchgeführt, wie es durch einen mit "Neu-Auswahl wegen Ablehnung" gekennzeichneten Pfeil 102 angedeutet ist. In dem Fall der Annahme des im Schritt 92 zufällig ausgewählten Objekts in dem Parametervergleich 98 wird dieses Informationsobjekt einer weiteren Annahme/Ablehnung-Stufe zugeführt, nämlich der zweiten Stufe 86 des Auswahlprozesses 80, wobei diese Folge in Fig. 2 mit einem mit "Annahme" überschriebenen Pfeil angedeutet ist.

Die Stufe 86 umfasst einen Gültigkeitsprüfungsprozess 104, der unter anderem auf den objektspezifischen Gewichtungsdaten 78 basiert, wie es durch einen Pfeil 106 angedeutet ist. Die Gültigkeitsprüfung 104 ist entweder zufälliger Natur und/oder absoluter Natur. Beispielsweise wird in der Gültigkeitsprüfung 104 überprüft, ob sich in den Daten 78 ein Eintrag befindet, der sich auf das in der ersten Stufe 84 des Auswahlprozesses 80 auserkorenen Informationsobjektes bezieht, und dieser Eintrag Werte für die situationsbezogenen Parameter 62 aufweist, die sich von den aktuellen Werten 70 nicht um mehr als ein vorbestimmtes Maß unterscheiden. Dies würde bedeuten, dass in der näheren Vergangenheit der Benutzer genau dieses Informationsobjekt in einer ähnlichen Situation abgelehnt hat. In dem Fall einer deterministischen Gültigkeitsprüfung 104 könnte dies zur Ablehnung führen. In dem Fall eines gewichteten Zufallsprozesses 104 könnte die Ablehnung je nach Unterscheidung der aktuellen Werte 70 und der in dem Eintrag der Tabelle 78 befindlichen Werte für die situationsbezogenen Parameter in der Wahrscheinlichkeit variieren. Auf diese Weise wirkt die Gültigkeitsprüfung derart, dass der langsameren Adaptation 74 noch eine schnellere Adaptation 76 vorgeschaltet ist.

Die Gültigkeitsprüfung 104 kann aber auch noch weitere Kriterien zur Gültigkeitsprüfung zusätzlich heranziehen. Beispielsweise protokolliert der Bewertungsprozess 72 in einer weiteren, in Fig. 2 nicht gezeigten Liste die wiedergegebenen Informationsobjekte. Eine unmittelbare Wiederholung dieser Informationsobjekte in einem Zeitraum von beispielsweise zwei Stunden könnte dann beispielsweise in dem Gültigkeitsprozess 104 vermieden werden, indem das die Stufe 84 passierte Objekt in der Stufe 86 abgelehnt wird. Ferner könnte der Gültigkeitsprüfungsprozess 104 auch Daten in dem aktuell zu überprüfenden Objekt selbst heranziehen, um eine Ablehnung- oder Annahmeentscheidung zu treffen. Beispielsweise bei Nachrichten-Informationsobjekten könnte das Alter der Nachricht bzw. die Aktualität der Nachricht in den Prozess 104 eingehen. Ältere Nachrichten würden weniger wahrscheinlich den Gültigkeitsprüfungsprozess 104 mit einer Annahme durchlaufen.

Führt der Gültigkeitsprüfungsprozess 104 zu einer "Ablehnung", so beginnt der Auswahlprozess 80 wieder bei den Prozessen 90 und 92, wie es durch den Pfeil 102 angedeutet ist. Mit jeder Ablehnung sinkt die Striktheit der Überprüfung der Ablehnungskriterien für den folgenden Durchgang, um sicherzustellen, dass nach einer maximalen Zahl von Durchläufen eine Auswahl erfolgt. Hat das Objekt jedoch auch die zweite Stufe 86 durch "Annahme" passiert, so ist dieses Objekt das in dem Auswahlprozess ausgewählte Objekt und wird als Objektauswahlergebnis an die Wiedergabeeinrichtung 14 ausgegeben, wie es durch einen Pfeil 108 angedeutet ist. Von der Wiedergabe der Objektauswahl an bezieht sich die Verhaltenserfassung 64 nun auf dieses soeben ausgewählte Objekt, wie es durch einen Pfeil 110 angedeutet ist. Hierdurch ist die Rückkopplungsschleife für die Adaptation 74 und 76 geschlossen, die die Bewertung des Benutzers als Grundlage für die Adaptation einbezieht.

In anderen Worten ausgedrückt bewirkt die Vorrichtung von Fig. 1 bzw. 2 eine personalisierte Informationsauswahl. Das Verhalten der Vorrichtung wird bei dem Ausführungsbeispiel von Fig. 2 anhand der Berücksichtigung der Situation und Umweltreaktion beeinflusst, wobei unter Informationsauswahl die selektive Speicherung und Wiedergabe von Informationen verstanden werden kann. Die Vorgehensweise entspricht einem rückgekoppelten System, das sich nach der Umweltreaktion auf die vorhergehende Informationsauswahl dem gewünschten Auswahlverhalten annähert. Die Umweltreaktion wird anhand mehrerer Eingabevariablen vorgegeben, nämlich den verschiedenen Umgebungsparametern bzw. situationsbezogenen Parametern und den Auswahlbewertungen bzw. der externen Bewertung. Die Bewertung wird anhand der bereits ausgewählten Objekte durch eine externe Auswertungseinrichtung, beispielsweise den Benutzer, erzeugt.

Die auszuwählenden Informationen sind in Form von voneinander unabhängigen Objekten strukturiert und gespeichert. Dabei bestand ein Objekt in den obigen Ausführungsbeispielen aus reinen Informationsdaten und aus objektspezifischen Parametern, die den Objektinhalt beschrieben. Die Umgebung, auf die das System reagierte, wurde mit situationsbezogenen Parametern beschrieben.

Wird beispielsweise die Vorrichtung von Fig. 1 nach dem Ausführungsbeispiel von Fig. 2 initialisiert, wird zu Beginn ein Objekt durch einen gleich verteilten stochastischen Zufallsprozess aus der Menge der verfügbaren Objekte ausgewählt. Für nachfolgende stochastische Auswahlprozesse werden die Auswahlwahrscheinlichkeiten 60 in Abhängigkeit von den bisherigen externen Bewertungen und der aktuellen Situation angepasst. Oder genauer und im Hinblick auf das Ausführungsbeispiel von Fig. 2 ausgedrückt wird die Auswahl aus dem Speicher immer zufällig getroffen, wobei allerdings die Akzeptanzwahrscheinlichkeit laufend angepasst wird. Der Einfluss einer externen Bewertung bzw. einer Benutzer-Entscheidung auf den aktuellen Auswahlprozess bzw. nachfolgende Auswahlvorgänge unter ähnlichen Situationen ist um so schwächer, je stärker die aktuelle Situation von der Situation abweicht, in der die Bewertung gegeben bzw. vorgenommen wurde, was hier als degressives Verfahren bezeichnet wird.

Obige Ausführungsbeispiele ermöglichen die personalisierte Auswahl von Informationen unter Berücksichtigung externer Umweltreaktionen ohne detaillierte Angabe von Auswahlkriterien. Eine komplexe aktive Beteiligung der Benutzer wird bei diesen Ausführungsbeispielen vermieden.

Ein mögliches Einsatzbeispiel einer Vorrichtung nach Fig. 1, die nach Fig. 2 arbeitet, ist die Auswahl von Audioobjekten nach Vorlieben eines Benutzers bei einem Autoradio. Ein Audioobjekt 50 enthält zusätzlich zu den reinen Informationsdaten 52, wie z.B. Musikstükken, objektspezifische Parameter 54, die das Objekt 50 beschreiben, wie Objekttyp, d.h. Musik, Nachrichten, Werbung usw., Objektlänge, Objektkategorie, d.h. Rock, Klassik, Techno oder Sport, Wirtschaft, Ausland usw. Mögliche situationsbezogene Parameter 62 sind die Tageszeit, die Stimmung des Benutzers, der Aufenthaltsort, Datum/Jahreszeit, die Wetterlage usw. Die Bewertungsmöglichkeit kann, wie im Vorhergehenden beschrieben, in einer "Skip"-Taste bestehen, mit der der Benutzer das Objekt überspringen kann. Dem Benutzer werden die Audioobjekte 50 angeboten, wobei sich die automatische Auswahl mit der Zeit anhand der externen Bewertungen an die Präferenzen des Benutzers annähert. Beispielsweise wird das System sich merken, dass der Benutzer zur Morgenstunde die Nachrichten anhört oder bei Regen Blues bevorzugt.

Zusätzlich zu diesem Einsatzbeispiel existieren viele weitere Anwendungsmöglichkeiten für die personalisierte Informationsauswahl entsprechend den vorhergehenden Auswahlbeispielen. Dazu gehören beispielsweise die Auswahl der täglichen Kleiderkombination, die sich anpassende farbliche Gestaltung oder der Duft eines Zimmers, die Auswahl von Lebensmitteln im Kühlschrank in einem sogenannten Home-Replenishment-System, wie oben gezeigt, usw.

Bezug nehmend auf die vorhergehende Beschreibung wird noch darauf hingewiesen, dass der Speicher 18, in welchem die Informationsobjekte bereitgestellt sind, beispielsweise eine CD, eine Festplatte, eine DVD, ein Magnetspeicher oder ein sonstiger Speicher sein kann, in welchem ein fester Satz an Informationsobjekten gespeichert ist. Der Satz von Informationsobjekten könnte dann durch Wechseln der CD oder Aktualisieren des Satzes intermittierend geändert werden. Möglich ist es aber ferner, dass der Speicher 18 als Cache ausgebildet ist, in welchem Informationsobjekte gespeichert werden, die z.B. über ein Rundfunksignal zyklisch ausgestrahlt werden. Die zyklisch ausgestrahlten Informationsobjekte werden an einem Rundfunkempfänger empfangen und dann in dem Cachespeicher nach einer vorbestimmten Verdrängungsstrategie eingetragen bzw. wieder aus dem Speicher 18 verdrängt. Die Verdrängungsstrategie könnte dabei die Wahrscheinlichkeiten verwenden, die durch die globale Gewichtung 60, die objektspezifischen Gewichtungsdaten 78 und die weiteren von der Gültigkeitsprüfung 104 verwendeten Kriterien definiert sind. Ein Informationsobjekt, welches nach den genannten Kriterien sehr unwahrscheinlich im Auswahlprozess 80 ausgewählt wird, wird demnach gar nicht in den Cachespeicher 18 übernommen oder sehr früh wieder verdrängt. Die Verdrängungsstrategie könnte ferner sowohl die Daten 60, 78 und die weiteren von der Gültigkeitsprüfung 104 verwendeten Daten als auch übliche Cachekriterien zur Verdrängung, wie nach dem FIFO-Prinzip, heranziehen, d.h. ein abgewandeltes FIFO-Prinzip sein oder dergleichen.

Ferner wird darauf hingewiesen, dass die Adaption der Wahrscheinlichkeitsverteilung abweichend von den vorhergehenden Ausführungsbeispielen nicht auf die Anpassung an die Bedürfnisse und Wünsche des Benutzers beschränkt ist. Es könnte ferner sein, dass beispielsweise in dem Fall eines Autoradios die Informationsauswahl nicht durch das Knopfdrücken des Benutzers, um ein Informationsobjekt abzubrechen und ein neues anzufordern, hinsichtlich der Wahrscheinlichkeitsverteilung adaptiert wird, sondern dass beispielsweise das Fahrverhalten des Benutzers herangezogen wird, um die Wahrscheinlichkeitsverteilung zu adaptieren. Nimmt die Aggressivität des Fahrverhaltens des Benutzers beispielsweise auf die Wiedergabe eines Rock-Musikstücks signifikant zu, so wird dies durch Adaption der Wahrscheinlichkeitsverteilung 60 berücksichtigt, insofern, als bei ähnlichen Situationen Rock-Musikstücke und ähnliche Audioobjekte weniger wahrscheinlich wiedergegeben werden. Durch eine solche Adaption könnte die Fahrsicherheit beispielsweise bei LKWs erhöht werden.

In Bezug auf die Auswertung bzw. den Bewertungsprozess 72 wird noch darauf hingewiesen, dass die dort beschriebene Auswertung der Reduzierung der unterliegenden Parameter auch erst dann erfolgen könnte, wenn Parameter für eine ähnliche Situation zu berechnen sind. Anders ausgedrückt könnte das Degressionsverfahren auch erst bei Auswahl anstatt bei Bewertung stattfinden.

Die im Vorhergehenden erwähnte Steuereinrichtung 12 könnte beispielsweise ein Computer sein oder aber ein entsprechend designter ASIC.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung zur Wiedergabe von in Informationsobjekten (50) bereitgestellten Informationen, mit
einer Einrichtung (12) zum zufälligen Auswählen eines Informationsobjekts (50) basierend auf einer adaptiven Wahrscheinlichkeitsverteilung (60), um ein ausgewähltes Informationsobjekt zu erhalten;
einer Einrichtung (14) zur Wiedergabe einer in dem ausgewählten Informationsobjekt bereitgestellten Information;
einer Einrichtung (16) zum Erfassen eines Verhaltens eines Benutzers auf die Wiedergabe der in dem ausgewählten Informationsobjekt bereitgestellten Information hin; und
einer Einrichtung (12) zum, basierend auf dem erfassten Verhalten, Adaptieren der adaptiven Wahrscheinlichkeitsverteilung,
wobei jedem Informationsobjekt (50) Kategoriezuordnungsdaten (54) zugeordnet sind, die angeben, wie sehr dasselbe jeder Kategorie aus einem Satz von Kategorien jeweils zugeordnet ist, wobei die Wahrscheinlichkeitsverteilung zumindest teilweise durch eine Gewichtungszuordnungsvorschrift definiert ist, die jeder Kategorie (58) zumindest einen Gewichtungswert zuordnet, und wobei die Einrichtung (12) zum zufälligen Auswählen ausgebildet ist, um die Auswahl abhängig von der Gewichtungszuordnungsvorschrift und den Kategoriezuordnungsdaten durchzuführen, die dem ausgewählten Informationsobjekt zugeordnet sind,
wobei die Vorrichtung ferner eine Einrichtung (68) zum Erfassen eines situationsbezogenen Parameters aufweist, der eine Situation beschreibt, in welcher das erfasste Verhalten des Benutzers stattfindet, um einen erfassten Wert (70) für den situationsbezogenen Parameter zu erhalten, wobei die Gewichtungszuordnungsvorschrift jeder Kategorie für unterschiedliche mögliche Werte des situationsbezogenen Parameters jeweils einen Gewichtungswert zuordnet, und wobei die Einrichtung (12) zum zufälligen Auswählen ausgebildet ist, um die Auswahl abhängig von der Gewichtungszuordnungsvorschrift, dem erfassten Wert des situationsbezogenen Parameters und den Kategoriezuordnungsdaten, die dem ausgewählten Objekt zugeordnet sind, durchzuführen.

2. Vorrichtung gemäß Anspruch 1, bei der jedem Informationsobjekt (50) ein Satz von Kategoriegewichtungen (56) als Kategoriezuordnungsdaten (54) zugeordnet sind, von denen jede Kategoriegewichtung (56) wiederum einer Kategorie (58) aus einem Satz von Kategorien zugeordnet ist, und die Wahrscheinlichkeitsverteilung zumindest teilweise durch eine Gewichtungszuordnungsvorschrift (60) definiert ist, die jeder Kategorie (58) zumindest einen Gewichtungswert zuordnet, und wobei die Einrichtung (12) zum zufälligen Auswählen ausgebildet ist, um die Auswahl abhängig von der Gewichtungszuordnungsvorschrift und den Kategoriegewichtungen durchzuführen, die dem ausgewählten Informationsobjekt zugeordnet sind.

3. Vorrichtung gemäß Anspruch 1 oder 2, bei der der situationsbezogene Parameter eine augenblickliche Tageszeit, eine Jahreszeit, ein Wochentag, eine augenblickliche Stimmung des Benutzers, eine augenblickliche Position des Benutzers oder eine augenblickliche Wetterlage ist.

4. Vorrichtung gemäß einem der Ansprüche 1 bis 3, bei der die Einrichtung (12) zum zufälligen Auswählen ferner folgende Merkmale aufweist:

    eine Einrichtung (90) zum Ermitteln, auf der Basis der adaptiven Wahrscheinlichkeitsverteilung, von optimalen Kategoriezuordnungsdaten (94);
    eine Einrichtung (92) zum zufälligen Aussuchen eines Kandidateninformationsobjekts aus den Informationsobjekten;
    eine Einrichtung (98) zum Akzeptieren des Kandidateninformationsobjekts als dem ausgewählten Informationsobjekt auf zufällige Weise abhängig von einer ersten Zufallsentscheidung (100) mit einer ersten Wahrscheinlichkeit, die von den optimalen Kategoriezuordnungsdaten (94) und den den Kandidateninformationsobjekt zugeordneten Kategoriezuordnungsdaten (96) abhängt,

    wobei die Einrichtung zum zufälligen Aussuchen und die Einrichtung zum Akzeptieren ausgebildet sind, um das Aussuchen und Akzeptieren zu wiederholen, falls das Kandidateninformationsobjekt abgelehnt wird.

**5.** Vorrichtung gemäß Anspruch 4, bei der die Einrichtung (98) zum Akzeptieren ausgebildet ist, um das Kandidateninformationsobjekt ferner abhängig von einer zweiten Entscheidung (104) mit einer zweiten Wahrscheinlichkeit durchzuführen, die von Zusatzdaten abhängt, die sich von der Gewichtungszuordnungsvorschrift und von den Kategoriezuordnungsdaten unterscheiden, und das Kandidateninformationsobjekt nur dann zu akzeptieren, falls beide Zufallsentscheidungen positiv ausfallen.

**6.** Vorrichtung gemäß Anspruch 5, die ferner folgende Merkmal aufweist:

eine Einrichtung (78) zum Verwalten einer Liste, in der ablehnende Verhalten des Benutzers auf die Wiedergabe von Informationsobjekten oder wiedergegebene Informationsobjekte gespeichert werden,

wobei die Einrichtung zum Akzeptieren ausgebildet ist, um die Liste zumindest als Teil der Zusatzdaten zu verwenden.

**7.** Vorrichtung gemäß Anspruch 6, bei der die Zusatzdaten ein Alter der Informationen des Kandidateninformationsobjekts aufweisen.

**8.** Vorrichtung gemäß einem der Ansprüche 4 bis 7, die ferner eine Einrichtung (68) zum Erfassen eines situationsbezogenen Parameters aufweist, die eine Situation beschreibt, in welcher das erfasste Verhalten des Benutzers stattfindet, um einen erfassten Wert (70) für den situationsbezogenen Parameter zu erhalten, wobei die Gewichtungszuordnungsvorschrift jeder Kategorie für unterschiedliche mögliche Werte des situationsbezogenen Parameters jeweils einen Gewichtungswert zuordnet, wobei die Einrichtung zum Ermitteln der optimalen Kategoriezuordnungsdaten ausgebildet ist, um die Ermittelung basierend auf der Gewichtungszuordnungsvorschrift und dem erfassten Wert des situationsbezogenen Parameters durchzuführen, um als optimale Kategoriezuordnungsdaten einen situationsabhängigen optimalen Satz von Kategoriegewichtungen zu erhalten.

**9.** Vorrichtung gemäß einem der vorhergehenden Ansprüche, die ferner folgendes Merkmal aufweist:

einen Speicher (18), in welchem die Informationsobjekte gespeichert sind.

**10.** Vorrichtung gemäß Anspruch 9, bei der der Speicher (18) einen auswechselbaren Datenträger, eine CD, eine DVD, eine Festplatte oder ein Magnetspeicher umfasst.

**11.** Vorrichtung gemäß Anspruch 9, die ferner folgende Merkmale aufweist:

eine Einrichtung zum Empfangen von Informationsobjekten, die über ein Rundfunksignal ausgestrahlt werden; und
eine Einrichtung zum Ersetzen von Informationsobjekten in dem Speicher mit empfangenen Informationsobjekten gemäß einer vorbestimmten Verdrängungsstrategie.

**12.** Vorrichtung gemäß Anspruch 11, bei der die Verdrängungsstrategie von der adaptiven Wahrscheinlichkeitsverteilung abhängt.

**13.** Vorrichtung gemäß einem der vorhergehenden Ansprüche, bei der die Einrichtung (16) zum Erfassen des Verhaltens des Benutzers eine Betätigungseinrichtung zum Eingeben einer Reaktion des Benutzers aufweist.

**14.** Vorrichtung gemäß Anspruch 13, bei der die Einrichtung zum Erfassen des Verhaltens des Benutzers ausgebildet ist, um die Eingabe einer Reaktion des Benutzers auf die Wiedergabe der in dem ausgewählten Informationsobjekt bereitgestellten Information hin als ablehnendes Verhalten des Benutzers zu interpretieren.

**15.** Vorrichtung gemäß Anspruch 13, bei der die Einrichtung zum Erfassen des Verhaltens des Benutzers ausgebildet ist, um in dem Fall, dass auf die Wiedergabe der in dem ausgewählten Informationsobjekt bereitgestellten Information hin keine Eingabe einer Reaktion durch den Benutzer erfolgt, dies als zustimmendes Verhalten zu interpretieren.

**16.** Vorrichtung gemäß Anspruch 13, bei der die Einrichtung zum Erfassen des Verhaltens des Benutzers zwei Eingabemöglichkeiten aufweist und ausgebildet ist, um die Eingabe einer Reaktion des Benutzers auf die Wiedergabe der in dem ausgewählten Informationsobjekt bereitgestellten Information hin unter Verwendung der ersten Eingabemöglichkeit als ablehnendes Verhalten des Benutzers zu interpretieren und die Eingabe einer Reaktion des Benutzers auf die Wiedergabe der in dem ausgewählten Informationsobjekt bereitgestellten Information hin unter Verwendung der weiten Eingabemöglichkeit als zustimmendes Verhalten des Benutzers zu interpretieren.

**17.** Vorrichtung gemäß einem der Ansprüche 13 bis 16, bei der die Einrichtung zum Eingeben einen Knopf, ein Mikrophon, eine Kamera, einen Hebel oder einen Schalter umfasst.

**18.** Vorrichtung gemäß einem der vorhergehenden Ansprüche, bei der die Informationen Audio- und/oder Videodaten oder Nachbestellungen für eine Home-Replenishment-System umfassen.

19. Vorrichtung gemäß einem der Ansprüche 1 bis 18, bei der die Einrichtung zum Adaptieren ausgebildet ist, um in dem Fall, dass das erfasste Verhalten ein ablehnendes Verhalten ist, die adaptive Wahrscheinlichkeitsverteilung derart zu adaptieren, dass anschließend Informationsobjekte, die einer Kategorie zugeordnet sind, denen das Informationsobjekt zugeordnet ist, in der die wiedergegebene Information bereitgestellt ist, weniger wahrscheinlich durch die Einrichtung zum zufälligen Auswählen ausgewählt werden, und/oder in dem Fall, dass das erfasste Verhalten ein zustimmendes Verhalten ist, die adaptive Wahrscheinlichkeitsverteilung derart zu adaptieren, dass Informationsobjekte, die einer Kategorie zugeordnet sind, der das Informationsobjekt zugeordnet ist, die die wiedergegebene Information bereitgestellt hat, wahrscheinlicher durch die Einrichtung zum zufälligen Auswählen ausgewählt werden.

20. Vorrichtung gemäß Anspruch 19, bei der die Einrichtung zum Adaptieren ausgebildet ist, um die Adaption abhängig von einem aktuellen Wert (70) eines situationsbezogenen Parameters durchzuführen, der die Situation beschreibt, in welcher das erfasste Verhalten des Benutzers stattfindet.

21. Vorrichtung gemäß Anspruch 19 oder 20, die ferner eine Einrichtung (68) zum Erfassen eines situationsbezogenen Parameters aufweist, der eine Situation beschreibt, in welcher das erfasste Verhalten des Benutzers stattfindet, um einen erfassten Wert (70) für den situationsbezogenen Parameter zu erhalten, wobei die Gewichtungszuordnungsvorschrift jeder Kategorie für unterschiedliche mögliche Werte des situationsbezogenen Parameters jeweils einen Gewichtungswert zuordnet, und bei der die Einrichtung zum Adaptieren ausgebildet ist, um die Adaption abhängig von dem erfassten Wert durchzuführen, derart, dass für jede Kategorie die dieser Kategorie zugeordneten Gewichtungswerte um so mehr verändert werden, je weniger der mögliche Wert des situationsbezogenen Parameters, für welchen der jeweilige Gewichtungswert der jeweiligen Kategorie zugeordnet ist, von dem erfassten Wert abweicht.

22. Verfahren zur Wiedergabe von in Informationsobjekten (50) bereitgestellten Informationen, mit folgenden Schritten:

zufälliges Auswählen eines Informationsobjekts (50) basierend auf einer adaptiven Wahrscheinlichkeitsverteilung (60), um ein ausgewähltes Informationsobjekt zu erhalten;

Wiedergeben einer in dem ausgewählten Informationsobjekt bereitgestellten Information; Erfassen eines Verhaltens eines Benutzers auf die Wiedergabe der in dem ausgewählten Informationsobjekt bereitgestellten Information hin; und basierend auf dem erfassten Verhalten, Adaptieren der adaptiven Wahrscheinlichkeitsverteilung,

wobei jedem Informationsobjekt (50) Kategoriezuordnungsdaten (54) zugeordnet sind, die angeben, wie sehr dasselbe jeder Kategorie aus einem Satz von Kategorien jeweils zugeordnet ist, wobei die Wahrscheinlichkeitsverteilung zumindest teilweise durch eine Gewichtungszuordnungsvorschrift definiert ist, die jeder Kategorie (58) zumindest einen Gewichtungswert zuordnet, und wobei der Schritt des zufälligen Auswählens so durchgeführt wird, dass die Auswahl abhängig von der Gewichtungszuordnungsvorschrift und den Kategoriezuordnungsdaten ist, die dem ausgewählten Informationsobjekt zugeordnet sind, wobei das Verfahren ferner ein Erfassen eines situationsbezogenen Parameters aufweist, der eine Situation beschreibt, in welcher das erfasste Verhalten des Benutzers stattfindet, um einen erfassten Wert (70) für den situationsbezogenen Parameter zu erhalten, wobei die Gewichtungszuordnungsvorschrift jeder Kategorie für unterschiedliche mögliche Werte des situationsbezogenen Parameters jeweils einen Gewichtungswert zuordnet, und wobei die Einrichtung (12) zum zufälligen Auswählen ausgebildet ist, um die Auswahl abhängig von der Gewichtungszuordnungsvorschrift, dem erfassten Wert des situationsbezogenen Parameters und den Kategoriezuordnungsdaten, die dem ausgewählten Objekt zugeordnet sind, durchzuführen.

23. Computer-Programm mit einem Programmcode zur Durchführung des Verfahrens nach Anspruch 22, wenn das Computer-Programm auf einem Computer abläuft.

**Claims**

1. Device for reproducing information provided in information objects (50), comprising:

means (12) for randomly selecting an information object (50) on the basis of an adaptive probability distribution (60) to obtain a selected information object; means (14) for reproducing a piece of information provided in the information object selected; means (16) for capturing a user's behavior upon the reproduction of the information provided in the information object selected; and
means (12) for adapting the adaptive probability distribution on the basis of the behavior captured,

wherein each information object (50) has category association data (54) associated with it which indicates the extent to which same is associated, respectively, with each category from a set of categories, the probability distribution being at least partly defined by a weighting association specification which associates at least one weighting value with each category (58), and wherein the means (12) for randomly selecting is configured to perform the selection in dependence on the weighting association specification and the category association data associated with the information object selected, wherein the device further comprises a means (68) for capturing a situation-related parameter which describes a situation in which the user's captured behavior occurs to obtain a captured value (70) for the situation-related parameter, the weighting association specification associating, with each category, one weighting value, respectively, for different possible values of the situation-related parameter, and wherein the means (12) for randomly selecting is configured to perform the selection in dependence on the weighting association specification, the captured value of the situation-related parameter, and the category association data associated with the object selected.

2. Device as claimed in claim 1, wherein each information object (50) has a set of category weightings (56) associated with it as category association data (54), each category weighting (56) of which, in turn, being associated with a category (58) from a set of categories, and the probability distribution being at least partly defined by a weighting association specification (60) which associates at least one weighting value with each category (58), and wherein the means (12) for randomly selecting is configured to perform the selection in dependence on the weighting association specification and the category weightings associated with the information object selected.

3. Device as claimed in claim 1 or 2, wherein the situation-related parameter is a present time of the day, a time of the year, a day of the week, a present mood of the user, a present position of the user, or a present weather situation.

4. Device as claimed in any of claims 1 to 3, wherein the means (12) for randomly selecting further comprises:

   means (90) for determining optimum category association data (94) on the basis of the adaptive probability distribution;
means (92) for randomly choosing a candidate information object from the information objects;
means (98) for accepting the candidate information object as the selected information object in a random manner, in dependence on a first random decision (100), with a first probability which depends on the optimum category association data (94) and the category association data (96) associated with the candidate information object,
the means for randomly choosing and the means for accepting being configured to repeat the choosing and accepting if the candidate information object is rejected.

5. Device as claimed in claim 4, wherein the means (98) for accepting is configured to further perform the candidate information object, in dependence on a second decision (104), with a second probability which depends on additional data which differ from the weighting association specification and from the category association data, and to accept the candidate information object only if both random decisions are positive.

6. Device as claimed in claim 5, further comprising:

   a means (78) for managing a list in which rejecting behaviors on the part of the user upon the reproduction of information objects or upon information objects reproduced are stored,

   wherein the means for accepting is configured to use the list at least as a part of the additional data.

7. Device as claimed in claim 6, wherein the additional data includes an age of the information of the candidate information object.

8. Device as claimed in any of claims 4 to 7, further comprising a means (68) for capturing a situation-related parameter which describes a situation in which the user's captured behavior occurs so as to obtain a captured value (70) for the situation-related parameter, the weighting association specification associating, with each category, one weighting value, respectively, for different possible values of the situation-related parameter, the means for determining the optimum category association data being configured to perform the determination on the basis of the weighting association specification and of the captured value of the situation-related parameter to obtain a situation-dependent, optimum set of category weightings as the optimum category association data.

9. Device as claimed in any of the previous claims, further comprising:

    a memory (18) in which the information objects are stored.

10. Device as claimed in claim 9, wherein the memory (18) includes a replaceable data carrier, a CD, a DVD, a hard disc or a magnetic memory.

11. Device as claimed in claim 9, further comprising:

    a means for receiving information objects broadcast via a broadcasting signal; and
    a means for replacing information objects in the memory by received information objects in accordance with a predetermined displacement strategy.

12. Device as claimed in claim 11, wherein the displacement strategy depends on the adaptive probability distribution.

13. Device as claimed in any of the previous claims, wherein the means (16) for capturing the user's behavior comprises an actuating means for inputting a reaction on the part of the user.

14. Device as claimed in claim 13, wherein the means for capturing the user's behavior is configured to interpret the input of a reaction on the part of the user upon the reproduction of the information provided in the information object selected as a rejecting behavior on the part of the user.

15. Device as claimed in claim 13, wherein the means for capturing the user's behavior is configured to, in the event that no input of a reaction occurs by the user upon the reproduction of the information provided in the information object selected, interpret this as an approving behavior.

16. Device as claimed in claim 13, wherein the means for capturing the user's behavior comprises two input possibilities and is configured to interpret the input of a reaction on the part of the user upon the reproduction of the information provided in the information object selected, using the first input possibility, as a rejecting behavior on the part of the user, and to interpret the input of a reaction on the part of the user upon the reproduction of the information provided in the information object selected, using the second input possibility, as an approving behavior on the part of the user.

17. Device as claimed in any of claims 13 to 16, wherein the means for inputting includes a button, a microphone, a camera, a lever, or a switch.

18. Device as claimed in any of the previous claims, wherein the information includes audio and/or video data or repeat orders for a home replenishment system.

19. Device as claimed in any of claims 1 to 18, wherein the means for adapting is configured to, in the event that the behavior captured is a rejecting behavior, adapt the adaptive probability distribution such that information objects which are associated with a category with which the information object, in which the information reproduced is provided, is associated, are subsequently less likely to be selected by the means for randomly selecting, and/or, in the event that the behavior captured is an approving behavior, adapt the adaptive probability distribution such that information objects which are associated with a category which has the information object, in which the information reproduced is provided, associated with it, are more likely to be selected by the means for randomly selecting.

20. Device as claimed in claim 19, wherein the means for adapting is configured to perform the adaptation in dependence on a current value (70) of a situation-related parameter which describes the situation in which the captured behavior on the part of the user occurs.

21. Device as claimed in claim 19 or 20, further comprising a means (68) for capturing a situation-related parameter which describes a situation in which the user's captured behavior occurs so as to obtain a captured value (70) for the situation-related parameter, the weighting association specification associating, with each category, one weighting value, respectively, for different possible values of the situation-related parameter, and wherein the means for adapting is configured to perform the adaptation in dependence on the value captured, such that, for each category, the weighting values associated with this category are changed the more, the less the possible value of the situation-related parameter, for which the respective weighting value is associated with the respective category, deviates from the value captured.

22. Method for reproducing information provided in information objects (50), comprising:

    randomly selecting an information object (50) on the basis of an adaptive probability distribution (60) to obtain a selected information object;
    reproducing a piece of information provided in the information object selected;
    capturing a user's behavior upon the reproduction of the information provided in the information object selected; and

on the basis of the behavior captured, adapting the adaptive probability distribution,

wherein each information object (50) has category association data (54) associated with it which indicates the extent to which same is associated, respectively, with each category from a set of categories, the probability distribution being at least partly defined by a weighting association specification which associates at least one weighting value with each category (58), and wherein the step of random selection is performed such that the selection is dependent on the weighting association specification and the category association data associated with the information object selected,

wherein the method further comprises capturing a situation-related parameter which describes a situation in which the user's captured behavior occurs so as to obtain a captured value (70) for the situation-related parameter, the weighting association specification associating, with each category, one weighting value, respectively, for different possible values of the situation-related parameter, and wherein the means (12) for randomly selecting is configured to perform the selection in dependence on the weighting association specification, the captured value of the situation-related parameter, and the category association data associated with the object selected.

23. Computer program having a program code for performing the method as claimed in claim 22, when the computer program runs on a computer.

**Revendications**

1. Dispositif pour la restitution d'informations mises à disposition dans des objets d'information (50), avec un moyen (12) destiné à sélectionner de manière aléatoire un objet d'information (50) sur base d'une distribution de probabilité adaptative (60), pour obtenir un objet d'information sélectionné;
un moyen (14) destiné à restituer une information mise à disposition dans l'objet d'information sélectionné;
un moyen (16) destiné à détecter un comportement d'un utilisateur en ce qui concerne la restitution d'une information mise à disposition dans l'objet d'information sélectionné; et
un moyen (12) destiné à adapter, sur base du comportement détecté, la distribution de probabilité adaptative,
à chaque objet d'information. (50) étant associées des données d'association de catégorie (54) qui indiquent l'intensité avec laquelle il est associé à chaque catégorie parmi un ensemble de catégories, la distribution de probabilité étant définie, au moins partiellement, par une règle d'association de pondération qui associe à chaque catégorie (58) au moins une valeur de pondération, et le moyen (12) destiné à sélectionner de manière aléatoire étant réalisé de manière à effectuer la sélection en fonction de la règle d'association de pondération et des données d'association de catégorie associées à l'objet d'information sélectionné,
le dispositif présentant par ailleurs un moyen (68) destiné à détecter un paramètre relatif à la situation qui décrit une situation dans laquelle a lieu le comportement détecté de l'utilisateur, pour obtenir une valeur détectée (70) pour le paramètre relatif à la situation, la règle d'association de pondération associant à chaque catégorie une valeur de pondération pour chacune de différentes valeurs possibles du paramètre relatif à la situation, et le moyen (12) destiné à sélectionner de manière aléatoire étant réalisé de manière à effectuer la sélection en fonction de la règle d'association de pondération, de la valeur détectée du paramètre relatif à la situation et des données d'association de catégorie associées à l'objet sélectionné.

2. Dispositif selon la revendication 1, dans lequel est associé à chaque objet d'information (50), comme données d'association de catégorie (54), un ensemble de pondérations de catégorie (56) dont chaque pondération de catégorie (56) est, à son tour, associée à une catégorie (58) parmi un ensemble de catégories, et la distribution de probabilité est définie au moins partiellement par une règle d'association de pondération (60) qui associe à chaque catégorie (58) au moins une valeur de pondération, et le moyen (12) destiné à sélectionner de manière aléatoire étant réalisé de manière à effectuer la sélection en fonction de la règle d'association de pondération et des pondérations de catégorie associées à l'objet d'information sélectionné.

3. Dispositif selon la revendication 1 ou 2, dans lequel le paramètre relatif à la situation est un moment du jour momentané, une saison, un jour de la semaine, une humeur momentanée de l'utilisateur, une position momentanée de l'utilisateur ou une situation climatologique momentanée.

4. Dispositif selon l'une des revendications 1 à 3, dans lequel le moyen (12) destiné à sélectionner de manière aléatoire présente par ailleurs les caractéristiques suivantes:

un moyen (90) destiné à déterminer, sur base de la distribution de probabilité adaptative, des données d'association de catégorie optimales (94);
un moyen (92) destiné à rechercher de manière aléatoire un objet d'informations candidat parmi les objets d'information;

un moyen (98) destiné à accepter l'objet d'informations candidat comme l'objet d'informations sélectionné de manière aléatoire en fonction d'une première décision aléatoire (100) avec une première probabilité qui est fonction des données d'association de catégorie optimales (94) et des données d'association de catégorie (96) associées à l'objet d'information candidat, le moyen destiné à rechercher de manière aléatoire et le moyen destiné à accepter sont réalisés de manière à répéter la recherche et l'acceptation si l'objet d'information candidat est rejeté.

5. Dispositif selon la revendication 4, dans lequel le moyen (98) destiné à accepter est réalisé de manière à rechercher l'objet d'information candidat en fonction d'une deuxième décision (104) avec une deuxième probabilité qui dépend de données additionnelles qui diffèrent de la règle d'association de pondération et des données d'association de catégorie, et à n'accepter l'objet d'information candidat que lorsque les deux décisions aléatoires résultent positives.

6. Dispositif selon la revendication 5, présentant par ailleurs la caractéristique suivante:

un moyen (78) destiné à gérer une liste dans laquelle sont mémorisés des comportements de rejet de l'utilisateur en ce qui concerne la restitution d'objets d'information ou d'objets d'information restitués,
le moyen destiné à accepter étant réalisé de manière à utiliser la liste au moins comme partie des données additionnelles.

7. Dispositif selon la revendication 6, dans lequel les données additionnelles présentent une ancienneté des informations de l'objet d'information candidat.

8. Dispositif selon l'une des revendications 4 à 7, présentant par ailleurs un moyen (68) destiné à détecter un paramètre relatif à la situation qui décrit une situation dans laquelle a lieu le comportement détecté de l'utilisateur, pour obtenir une valeur détectée (70) pour le paramètre relatif à la situation, la règle d'association de pondération associant à chaque catégorie, pour différentes valeurs possibles du paramètre relatif à la situation, une valeur de pondération, le moyen destiné à déterminer les données d'association de catégorie optimales étant réalisé de manière à effectuer la détermination sur base de la règle d'association de pondération et de la valeur détectée du paramètre relatif à la situation, pour obtenir comme données d'association de catégorie optimales un ensemble optimal fonction de la situation de pondérations de catégorie.

9. Dispositif selon l'une des revendications précédentes, présentant par ailleurs la caractéristique suivante:

une mémoire (18) dans laquelle sont mémorisés les objets d'information.

10. Dispositif selon la revendication 9, dans lequel la mémoire (18) comporte un support de données échangeable, un CD, un DVD, un disque dur ou une mémoire magnétique.

11. Dispositif selon la revendication 9, présentant par ailleurs la caractéristique suivante:

un moyen destiné à recevoir des objets d'information qui sont rayonnées par l'intermédiaire d'un signal radioélectrique; et
un moyen destiné à remplacer des objets d'information dans la mémoire par des objets d'information reçus selon une stratégie de refoulement prédéterminée.

12. Dispositif selon la revendication 11, dans lequel la stratégie de refoulement dépend de la distribution de probabilité adaptative.

13. Dispositif selon l'une des revendications précédentes, dans lequel le moyen (16) destiné à détecter le comportement de l'utilisateur présente un moyen d'actionnement destiné à entrer une réaction de l'utilisateur.

14. Dispositif selon la revendication 13, dans lequel le moyen destiné à détecter le comportement de l'utilisateur est réalisé de manière à interpréter l'entrée d'une réaction de l'utilisateur en ce qui concerne la restitution de l'information mise à disposition dans l'objet d'information sélectionné comme comportement de rejet de l'utilisateur.

15. Dispositif selon la revendication 13, dans lequel le moyen destiné à détecter le comportement de l'utilisateur est réalisé de manière à, au cas où il ne se produit pas de réaction par l'utilisateur en ce qui concerne la restitution de l'information mise à disposition dans l'objet d'information sélectionné, interpréter cela comme comportement d'acceptation.

16. Dispositif selon la revendication 13, dans lequel le moyen destiné à détecter le comportement de l'utilisateur présente deux possibilités d'entrée et est réalisé de manière à interpréter l'entrée d'une réaction de l'utilisateur en ce qui concerne la restitution de l'information mise à disposition dans l'objet d'information sélectionné à l'aide de la première possibilité d'entrée comme comportement de rejet de l'utilisateur et à interpréter l'entrée d'une réaction de l'utilisateur en ce qui concerne la restitution de l'information mise à disposition dans l'objet d'information sélectionné à l'aide de la deuxième possibilité d'entrée comme comportement d'acceptation de l'utilisateur.

17. Dispositif selon l'une des revendications 13 à 16, dans lequel le moyen destiné à entrer comprend un bouton, un microphone, une caméra, un levier ou un interrupteur.

18. Dispositif selon l'une des revendications précédentes, dans lequel les informations comprennent des données audio et/ou vidéo ou des commandes ultérieures pour un système de 'home replenishment' (= remplissage domestique).

19. Dispositif selon l'une des revendications 1 à 18, dans lequel le moyen destiné à adapter est réalisé de manière à adapter, au cas où le comportement détecté est un comportement de rejet, la distribution de probabilité adaptative de sorte que, ensuite, des objets d'information qui sont associés à une catégorie à laquelle est associé l'objet d'information dans lequel est mise à disposition l'information restituée sont sélectionnés de manière moins probable par le moyen destiné à sélectionner de manière aléatoire, et/ou à adapter, au cas où le comportement détecté est un comportement d'acceptation, la distribution de probabilité adaptative de sorte que des objets d'information qui sont associés à une catégorie à laquelle est associé l'objet d'information qui a mis à disposition l'information restituée sont sélectionnés de manière plus probable par le moyen destiné à sélectionner de manière aléatoire.

20. Dispositif selon la revendication 19, dans laquelle le moyen destiné à adapter est réalisé de manière à effectuer l'adaptation en fonction d'une valeur actuelle (70) d'un paramètre relatif à la situation qui décrit une situation dans laquelle a lieu le comportement détecté du l'utilisateur.

21. Dispositif selon la revendication 19 ou 20, présentant par ailleurs un moyen (68) destiné à détecter un paramètre relatif à la situation qui décrit une situation dans laquelle a lieu le comportement détecté du l'utilisateur, pour obtenir une valeur détectée (70) pour le paramètre relatif à la situation, la règle d'association de pondération associant à chaque catégorie, pour différentes valeurs possibles du paramètre relatif à la situation, une valeur de pondération, et dans lequel le moyen destiné à adapter est réalisé de manière à effectuer l'adaptation en fonction de la valeur détectée, de sorte que, pour chaque catégorie, les valeurs de pondération associées à cette catégorie soient d'autant plus modifiées que la valeur possible du paramètre relatif à la situation pour lequel la valeur de pondération respective est associée à la catégorie diffère moins de la valeur détectée.

22. Procédé pour la restitution d'informations mises à disposition dans des objets d'information (50), aux étapes suivantes consistant à :

sélectionner de manière aléatoire un objet d'information (50) sur base d'une distribution de probabilité adaptative (60), pour obtenir un objet d'information sélectionné ;
restituer une information mise à disposition dans l'objet d'information sélectionné ;
détecter un comportement d'un utilisateur en ce qui concerne la restitution d'une information mise à disposition dans l'objet d'information sélectionné ; et
sur base du comportement détecté, adapter la distribution de probabilité adaptative,
à chaque objet d'information (50) étant associées des données d'association de catégorie (54) qui indiquent l'intensité avec laquelle il est associé à chaque catégorie parmi un ensemble de catégories, la distribution de probabilité étant définie, au moins partiellement, par une règle d'association de pondération qui associe à chaque catégorie (58) au moins une valeur de pondération, et l'étape consistant à sélectionner de manière aléatoire étant effectuée de sorte que la sélection soit fonction de la règle d'association de pondération et des données d'association de catégorie associées à l'objet d'information sélectionné,
le procédé présentant par ailleurs une détection d'un paramètre relatif à la situation qui décrit une situation dans laquelle a lieu le comportement détecté de l'utilisateur, pour obtenir une valeur détectée (70) pour le paramètre relatif à la situation, la règle d'association de pondération associant à chaque catégorie une valeur de pondération pour chacune de différentes valeurs possibles du paramètre relatif à la situation, et le moyen (12) destiné à sélectionner de manière aléatoire étant réalisé de manière à effectuer la sélection en fonction de la règle d'association de pondération, de la valeur détectée du paramètre relatif à la situation et des données d'association de catégorie associées à l'objet sélectionné.

23. Programme d'ordinateur avec un code de programme pour réaliser le procédé selon la revendication 22 lorsque le programme d'ordinateur est exécuté sur un ordinateur.

FIG 1

16

EINRICHTUNG ZUM
ERFASSEN DES
VERHALTENS DES
BENUTZERS AUF
INFORMATIONS-
WIEDERGABE HIN

10

18

INFOR-
MATI-
ONS-
OBJEK-
TE

12

STEUER-
EIN-
RICHTUNG

14

WIEDERGABE-
EINRICHTUNG

WAHRSCHEIN-
LICHKEITS-
VERTEI-
LUNG

20

SITUATIONS-
ERFASSUNGS-
EINRICHTUNG

68

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004025510 A